# EUROPEAN PATENT APPLICATION

(11) **EP 4 669 023 A1**
(43) Date of publication of application: **24.12.2025**
(21) Application number: 24769762.6
(22) Date of filing: 01.03.2024
(51) Int. Cl.: H04W 80/06

(54) **DATA TRANSMISSION METHOD AND APPARATUS**

(30) Priority: 14.03.2023 CN 202310269116
(71) Applicant: Huawei Technologies Co., Ltd., Shenzhen, Guangdong 518129 (CN)
(72) Inventor: YU, Youyang, Shenzhen, Guangdong 518129 (CN)
(74) Representative: Isarpatent
(86) International application number: PCT/CN2024/079488
(87) International publication number: WO 2024/188068

(57) **Abstract**

This application provides a data transmission method and apparatus, to help implement smooth data transmission and improve data transmission efficiency when a UPF cannot identify an IP address of a terminal device. The method includes: A first UPF receives a first data packet from a first terminal device, where the first data packet carries identification information of a second UPF and a network address of a second terminal device; and the first UPF sends a second data packet to the second UPF based on the identification information of the second UPF, where the second UPF is a UPF serving the second terminal device, and the second data packet carries identification information of the first UPF and the network address of the second terminal device.

## Description

This application claims priority to Chinese Patent Application No. 202310269116.4, filed with the China National Intellectual Property Administration on March 14, 2023 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In some scenarios, a plurality of terminal devices may form a group. For example, in to consumer (to consumer, toC) services, various terminal devices in a user family may form a group; and in to business (to business, toB) services, terminal devices of enterprise employees may form a group. The group formed by the plurality of terminal devices may be referred to as a personal internet of things network (personal IoT network, PIN).

When terminal devices within a group need to communicate across domains, connections need to be established between the terminal devices. For example, in the PIN network formed by the plurality of terminal devices, to implement cross-domain interworking between PIN network members (that is, the terminal devices), a core network side stores information about members (for example, identification information of the members) belonging to the same PIN network. When different members are connected to different user plane functions (user plane functions, UPFs), general packet radio service tunnelling protocol for user plane (general packet radio service tunnelling protocol for user plane, GTP-U) tunnels between the different UPFs are established. After the GTP-U tunnels between the different UPFs are established, a session management function (session management function, SMF) network element configures, on each UPF, a routing policy, which includes an internet protocol (internet protocol, IP) address of a user terminal device and GTP-U tunnel information corresponding to the internet protocol address. When forwarding a data packet from a terminal device, the UPF may determine corresponding GTP-U tunnel information based on an IP address of a destination terminal device of the data packet, and continue to transmit the data packet through the GTP-U tunnel.

However, if the IP address of the destination terminal device is provided by a campus service provider, in other words, the IP address of the terminal device is an IP address of a private network terminal device, which is not expected to be identified by operators' UPFs, the UPF cannot identify the IP address of the private network terminal device. Consequently, the UPF cannot continue to transmit the data packet.

### SUMMARY

This application provides a data transmission method and apparatus, to help implement smooth data transmission and improve data transmission efficiency when a UPF cannot identify an IP address of a terminal device.

According to a first aspect, a data transmission method is provided. The method is performed by a first UPF. The method includes: The first UPF receives a first data packet from a first terminal device, where the first data packet carries identification information of a second UPF and a network address of a second terminal device; and the first UPF sends a second data packet to the second UPF based on the identification information of the second UPF, where the second UPF is a UPF serving the second terminal device, and the second data packet carries the identification information of the first UPF and the network address of the second terminal device.

It should be understood that there is a correspondence between identification information of each UPF and a network address of a corresponding UPF. The first UPF may determine, based on the identification information of the second UPF carried in the first data packet, that the first data packet is sent to the second UPF, and send the second data packet to the second UPF based on a network address of the second UPF. The second data packet may be a packet in which the network address of the second UPF and the identification information of the first UPF are encapsulated at an outer layer of the first data packet. Optionally, the identification information of the second UPF is deleted from the first data packet.

According to the data transmission method in this embodiment of this application, the first UPF identifies identification information in a received data packet to determine a destination UPF of the data packet, so that the destination UPF sends the data packet to a destination terminal device. This avoids a data transmission failure caused because the first UPF cannot identify an IP address of the destination terminal device in the data packet. This embodiment of this application helps implement smooth data transmission and improve data transmission efficiency when a UPF cannot identify an IP address of a terminal device.

With reference to the first aspect, in some implementations of the first aspect, the first terminal device and the second terminal device belong to a personal internet of things network PIN network.

It should be understood that the PIN network is a group or a subnet formed by a plurality of terminal devices. The PIN network may also be referred to as a PIN group.

With reference to the first aspect, in some implementations of the first aspect, before the first UPF receives the first data packet from the first terminal device, the method further includes: The first UPF receives a third data packet from the second UPF, where the third data packet carries the identification information of the second UPF and a network address corresponding to a destination UPF, a destination address of the third data packet is the network address corresponding to the destination UPF, and the destination UPF includes the first UPF; and the first UPF sends a fourth data packet to the first terminal device, where the fourth data packet carries the identification information of the second UPF.

It should be understood that the third data packet is sent by the second UPF to destination UPFs in a broadcast manner, and the first UPF is one of the destination UPFs. The network address corresponding to the destination UPF may be a specific broadcast or multicast network address. The second UPF may send, by identifying the specific broadcast or multicast network address, the third data packet to a plurality of destination UPFs corresponding to the specific network address. In addition, the network address corresponding to the destination UPF may alternatively be a network address of one UPF. For example, if the network address corresponding to the destination UPF is a network address of the first UPF, the second UPF sends the third data packet to the first UPF, and terminal devices served by the destination UPF and the second UPF belong to a same PIN group.

With reference to the first aspect, in some implementations of the first aspect, the first data packet and the second data packet include same data content.

With reference to the first aspect, in some implementations of the first aspect, the method further includes: The first UPF receives at least one of the identification information of the first UPF, identification information of another UPF, and routing policy information from an SMF, where the first UPF and the another UPF serve the same PIN network, the routing policy information includes first routing policy information and/or second routing policy information, the first routing policy information indicates the first UPF to include the identification information of the first UPF in an uplink data packet, and the second routing policy information indicates the first UPF to include the identification information of the another UPF in a downlink data packet.

It should be understood that the identification information of the another UPF may be obtained by the SMF through an NRF. The NRF has a storage function, and may store a network address of a UPF and identification information of the UPF. There is the correspondence between the identification information of each UPF and the network address of the corresponding UPF, and there may be one or more other UPFs. The identification information of each UPF may be unique in an entire network, or may be unique in the PIN network. When the identification information of each UPF is unique in the PIN network, the NRF stores a correspondence between a PIN identifier of the PIN network, the network address of the UPF, and the identification information of the UPF. The PIN identifier of the PIN network may be a PIN identity (PIN identity, PIN ID), a PIN network name, or the like. This is not limited in embodiments of this application.

It should be further understood that the SMF may send the identification information of the first UPF, the identification information of the another UPF, and the routing policy information to the first UPF via different messages. For example, the SMF may send the routing policy information and the identification information of the first UPF to the first UPF via a first message (for example, a packet forwarding control protocol update request message), and send the identification information of the another UPF to the first UPF via a second message. If the first UPF has stored the identification information of the another UPF serving the same PIN network and the another UPF is not updated, the SMF does not need to send the identification information of the another UPF to the first UPF again. If the another UPF serving the same PIN network is updated (for example, a newly added UPF exists), the SMF sends identification information of the newly added UPF to the first UPF.

With reference to the first aspect, in some implementations of the first aspect, the identification information of the first UPF is included in any one of the following headers of the second data packet: an internet protocol IP header, a virtual extensible local area network (virtual extensible local area network, VXLAN) header, a general packet radio service tunnelling protocol for user plane GTP-U header, or an IP security (internet protocol security, IPsec) header.

It should be understood that the first UPF may include the identification information of the first UPF in an option parameter of the IP header, for example, include the identification information of the first UPF in a routing option parameter, or include the identification information of the first UPF in a flow identification parameter. When the first UPF encapsulates data content in a VXLAN manner, the first UPF may encapsulate a VXLAN header, a user datagram protocol UDP header, and an IP header at an outer layer of the data content, and include the identification information of the first UPF in the VXLAN header. When the first UPF transmits a data packet through a GTP-U channel, a GTP-U header, a UDP header, and an IP header may be encapsulated outside data content, and the GTP-U header carries the identification information of the first UPF. When the first UPF performs IPsec encapsulation on data content, the identification information of the first UPF may be carried in an IPsec encapsulating security payload (encapsulating security payload, ESP) header, or the identification information of the first UPF may be carried in an IP header.

With reference to the first aspect, in some implementations of the first aspect, the method further includes: The first UPF receives a fifth data packet from the first terminal device, where the fifth data packet carries the network address of the second terminal device; and the first UPF sends a sixth data packet to the destination UPF, where the sixth data packet carries the identification information of the first UPF, the network address corresponding to the destination UPF, and the network address of the second terminal device, and the network address corresponding to the destination UPF is a destination address of the sixth data packet.

It should be understood that the network address corresponding to the destination UPF is the specific broadcast or multicast network address. The first UPF may send, by identifying the specific broadcast or multicast network address, the sixth data packet to the plurality of UPFs corresponding to the specific network address. Terminal devices served by the plurality of UPFs and the first terminal device belong to the same PIN group. After receiving the sixth data packet, the plurality of UPFs identify the network address of the second terminal device, and the UPF serving the second terminal device sends the sixth data packet to the second terminal device.

With reference to the first aspect, in some implementations of the first aspect, the method further includes: The first UPF receives a seventh data packet from the first terminal device; the first UPF determines, based on the seventh data packet, that the seventh data packet is a broadcast packet or a multicast packet; and the first UPF sends an eighth data packet to the destination UPF, where the eighth data packet carries the identification information of the first UPF and the network address corresponding to the destination UPF, and the network address corresponding to the destination UPF is a destination address of the eighth data packet.

In a possible implementation, the seventh data packet is the multicast packet or the broadcast packet, and a destination network address (for example, an IP address or a MAC address) of the broadcast packet or the multicast packet is a specific multicast or broadcast network address different from that of a unicast packet. The first UPF may determine, based on the destination network address of the seventh data packet, that the seventh data packet is the broadcast packet or the multicast packet, make multiple copies of the seventh data packet, and separately perform encapsulation processing on the plurality of seventh data packets, to be specific, separately encapsulate a network address of one UPF in the destination UPFs and the identification information of the first UPF at an outer layer of each seventh data packet, to obtain a plurality of eighth data packets. A terminal device corresponding to the destination UPF and the first terminal device belong to the same PIN group. The first UPF sends the plurality of eighth data packets to the corresponding destination UPFs. When the plurality of UPFs receive the corresponding eighth data packets, each UPF performs decapsulation processing on the corresponding eighth data packet, and sends the corresponding decapsulated data packet to a corresponding terminal device in the same PIN group by identifying a specific multicast or broadcast network address. For example, the second terminal device corresponding to the second UPF and the first terminal device belong to the same PIN group. The first UPF encapsulates the network address of the second UPF and the identification information of the first UPF in a first seventh data packet, to obtain the eighth data packet. The network address of the second UPF is the destination address of the eighth data packet. After receiving the eighth data packet, the second UPF performs decapsulation on the eighth data packet, to be specific, deletes the network address of the second UPF, and sends the decapsulated data packet to the second terminal device by identifying the specific network address of the broadcast packet or the multicast packet.

In another possible implementation, the seventh data packet is the multicast packet or the broadcast packet, and a destination network address of the broadcast packet or the multicast packet is a specific network address different from that of a unicast packet. The first UPF may determine, based on the destination network address of the seventh data packet, that the seventh data packet is the broadcast packet or the multicast packet. The first UPF performs encapsulation processing on the seventh data packet, to be specific, encapsulates the network address corresponding to the destination UPF and the identification information of the first UPF at an outer layer of the seventh data packet, to obtain the eighth data packet. The network address corresponding to the destination UPF is also a specific network address corresponding to the broadcast packet or the multicast packet. The first UPF may send the eighth data packet to the plurality of corresponding UPFs by identifying the network address corresponding to the destination UPF. Terminal devices served by the first UPF and the plurality of UPFs belong to the same PIN group. After receiving the eighth data packet, the plurality of UPFs separately perform decapsulation on the eighth data packet, to be specific, delete the network address corresponding to the destination UPF, and send the decapsulated data packet to the corresponding terminal devices in the same PIN group by identifying a specific multicast or broadcast network address corresponding to the seventh data packet.

With reference to the first aspect, in some implementations of the first aspect, the first UPF determines the network address of the destination UPF and/or the identification information of the destination UPF based on the PIN identifier of the PIN network.

It should be understood that the first UPF may receive a data packet from the first terminal device, and the data packet is sent by the first terminal device to the first UPF via a protocol data unit (protocol data unit, PDU) session corresponding to the PIN group. Therefore, after receiving the data packet, the first UPF may determine the PIN group corresponding to the data packet, and determine a network address of another UPF serving the PIN network/group and/or identification information of the another UPF based on an identifier of the PIN group (for example, a PIN ID or a PIN group name). This is not limited in embodiments of this application. In addition, the first UPF may alternatively determine, based on a unique special data network name corresponding to the PIN group, the network address of the another UPF serving the PIN network and/or the identification information of the another UPF. The another UPF may be a destination UPF. In a process in which the first terminal device establishes a PDU session connection with the first UPF through the SMF, the SMF includes, in a packet forwarding control protocol (packet forwarding control protocol, PFCP) session request message sent to the first UPF, PIN group information corresponding to the PDU session, for example, the PIN ID, or a data network name (DNN) and/or slice information corresponding to the PIN group. Therefore, the first UPF may determine, by identifying the PDU session for transmitting the data packet, the PIN group corresponding to the data packet.

According to a second aspect, a data transmission method is provided. The method is performed by an SMF. The method includes: The SMF obtains identification information of a first UPF; and the SMF sends at least one of the identification information of the first UPF, identification information of another UPF, and routing policy information to the first UPF, where the first UPF and the another UPF serve a same PIN network, the routing policy information includes first routing policy information and/or second routing policy information, the first routing policy information indicates the first UPF to include the identification information of the first UPF in an uplink data packet, and the second routing policy information indicates the first UPF to include the identification information of the another UPF in a downlink data packet.

It should be understood that identification information is used to identify a UPF, each UPF corresponds to unique identification information, and the identification information may also be referred to as a label. It should be further understood that there are a plurality of methods for obtaining the first UPF by the SMF. For example, the SMF may determine the identification information for the first UPF, or may obtain the identification information of the first UPF through an NRF connected to the SMF or receive the identification information reported by the first UPF. This is not limited in embodiments of this application.

With reference to the second aspect, in some implementations of the second aspect, the identification information of the first UPF is determined by one of the SMF, the NRF, or the first UPF.

A method for determining the identification information of the first UPF by the SMF is as follows:

In a possible implementation, in a process in which the first terminal device establishes a PDU session connection with the first UPF through the SMF, after determining that the first UPF serves the first terminal device, the SMF allocates the identification information to the first UPF.

In another possible implementation, when the SMF establishes a connection to the first UPF for the first time, the SMF allocates the identification information to the first UPF.

A method for determining the identification information of the first UPF by the NRF is as follows:
In a process in which the first terminal device establishes the PDU session connection with the first UPF through the SMF, after determining that the first UPF serves the first terminal device, the SMF may send a request message to the NRF connected to the SMF. The message carries a network address of the first UPF, a fully qualified domain name (fully qualified domain name, FQDN) of the first UPF, or a device name of the first UPF. After receiving the request message, the NRF searches for or allocates the identification information of the first UPF based on the network address, the FQDN, or the device name of the first UPF, and sends the identification information to the SMF.

A method for determining the identification information of the first UPF by the first UPF is as follows:
In a possible implementation, in the process in which the first terminal device establishes the PDU session connection with the first UPF through the SMF, after determining that the first UPF serves the first terminal device, the SMF needs to send a PFCP session request message to the first UPF. After receiving the message, the first UPF determines the identification information of the first UPF, and includes the identification information of the first UPF in a response message sent to the SMF.

In another possible implementation, when the first UPF establishes a connection to the SMF for the first time, the first UPF determines the identification information of the first UPF, and sends the identification information of the first UPF to the SMF.

With reference to the second aspect, in some implementations of the second aspect, the method further includes: The SMF sends a first correspondence to the first terminal device, where the first correspondence includes a correspondence between identification information of at least one UPF and a network address of at least one terminal device served by the UPF.

It should be understood that the first correspondence is sent, to the SMF, by the NRF connected to the SMF. The NRF has a storage function, and may store a network address or an FQDN or a device name of a UPF, identification information of the UPF, and a network address of at least one terminal device served by the UPF (or referred to as a network address segment corresponding to the terminal device served by the UPF). There is a first correspondence between the identification information of the UPF and the network address of the at least one terminal device served by the UPF. The network address of the terminal device may be allocated by the SMF or the UPF. When the network address of the terminal device is allocated by the UPF, the UPF sends the allocated network address to the SMF connected to the UPF.

According to a third aspect, a data transmission method is provided. The method is performed by a first terminal device. The method includes: The first terminal device receives a ninth data packet, where the ninth data packet carries a network address of a second terminal device; and the first terminal device sends a first data packet to a first UPF, where the first data packet carries identification information of a second UPF and the network address of the second terminal device.

It should be understood that the first terminal device may perform encapsulation processing on data content to obtain the first data packet, and a destination address of the first data packet is the network address of the second terminal device. The foregoing encapsulation processing may be encapsulating the identification information of the second UPF in the data content.

With reference to the third aspect, in some implementations of the third aspect, before the first terminal device sends the first data packet to the first UPF, the method further includes: The first terminal device determines the identification information of the second UPF corresponding to the destination address of the first data packet.

With reference to the third aspect, in some implementations of the third aspect, that the first terminal device determines the identification information of the second UPF corresponding to the destination address of the first data packet includes: The first terminal device determines the identification information of the second UPF based on a first correspondence, where the first correspondence includes a correspondence between identification information of at least one UPF and a network address of at least one terminal device served by the UPF.

With reference to the third aspect, in some implementations of the third aspect, the method further includes: The first terminal device receives the first correspondence from an SMF.

With reference to the third aspect, in some implementations of the third aspect, the ninth data packet carries the identification information of the second UPF.

With reference to the third aspect, in some implementations of the third aspect, the identification information of the second UPF is included in any one of the following headers of the first data packet: an Ethernet header, an internet protocol IP header, or a packet data convergence protocol (packet data convergence protocol, PDCP) header.

It should be understood that, if a PDU session established between the first terminal device and the first UPF is an IP session, the identification information of the second UPF may be carried in the IP header of the first data packet. If the PDU session established between the first terminal device and the first UPF is an Ethernet session, the identification information of the second UPF may be carried in the Ethernet header of the first data packet. If the PDU session established between the first terminal device and the first UPF is an unstructured session, a protocol header may be newly added, and the newly added header carries the identification information of the second UPF. In addition, a label may also be carried in the PDCP header of the first data packet. After receiving the first data packet, an access network device obtains the identification information of the second UPF carried in the PDCP header, includes the identification information of the second UPF in a GTP-U header, and sends the first data packet to the first UPF.

According to a fourth aspect, a data transmission method is provided. The method is applied to a system including an SMF, a first terminal device, a first UPF, and a second UPF. The method includes: The SMF obtains identification information of the first UPF; the SMF sends at least one of the identification information of the first UPF, identification information of another UPF, and routing policy information to the first UPF, where the first UPF and the another UPF serve a same PIN network, the routing policy information includes first routing policy information and/or second routing policy information, the first routing policy information indicates the first UPF to include the identification information of the first UPF in an uplink data packet, and the second routing policy information indicates the first UPF to include the identification information of the another UPF in a downlink data packet; the first terminal device receives a ninth data packet, where the ninth data packet carries a network address of a second terminal device; the first terminal device sends a first data packet to the first UPF, where the first data packet carries identification information of the second UPF and the network address of the second terminal device; the first UPF receives the first data packet; and the first UPF sends a second data packet to the second UPF based on the identification information of the second UPF, where the second UPF is a UPF serving the second terminal device, and the second data packet carries the identification information of the first UPF and the network address of the second terminal device.

With reference to the fourth aspect, in some implementations of the fourth aspect, the method further includes: The second UPF receives the second data packet; the second UPF sends a tenth data packet to the second terminal device based on the network address of the second terminal device, where the tenth data packet carries the identification information of the first UPF; and the second terminal device receives the tenth data packet.

It should be understood that the tenth data packet is obtained by performing decapsulation processing on the second data packet by the second UPF, to be specific, obtained by deleting a network address of the second UPF from the second data packet.

According to a fifth aspect, a data transmission apparatus is provided, configured to perform the method in any possible implementation of the first aspect to the third aspect. Specifically, the data transmission apparatus includes a module configured to perform the method in any possible implementation of the first aspect to the third aspect.

In a design, the data transmission apparatus may include modules one-to-one corresponding to performing the methods/operations/steps/actions described in the first aspect to the third aspect. The modules may be hardware circuits, or may be software, or may be implemented by hardware circuits in combination with software.

In another design, the data transmission apparatus is a communication chip, and the communication chip may include an input circuit or interface configured to send a message or data, and an output circuit or interface configured to receive information or data.

In another design, the data transmission apparatus may be a communication device, and the communication device may include a transmitter configured to send a message or data, and a receiver configured to receive information or data.

According to a sixth aspect, another data transmission apparatus is provided, including a processor and a memory. The processor is configured to: read instructions stored in the memory; receive a signal through a receiver; and transmit a signal through a transmitter, to perform the method in any possible implementation of the first aspect to the third aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory like a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The data transmission apparatus in the sixth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a seventh aspect, a computer-readable storage medium is provided. The computer-readable storage medium stores a computer program (which may also be referred to as code or instructions). When the computer program is run on a computer, the computer is caused to perform the method in any possible implementation of the first aspect to the third aspect.

According to an eighth aspect, a computer program product is provided. The computer program product includes a computer program (which may also be referred to as code or instructions). When the computer program is run, a computer is caused to perform the method in any possible implementation of the first aspect to the third aspect.

### BRIEF DESCRIPTION OF DRAWINGS

FIG. 1 is a diagram of a network architecture of a communication system according to an embodiment of this application;
FIG. 2 is a diagram of a network architecture of another communication system according to an embodiment of this application;
FIG. 3 is a diagram of an application scenario according to an embodiment of this application;
FIG. 4 is a schematic flowchart of a data transmission method according to an embodiment of this application;
FIG. 5A to FIG. 5E are a schematic flowchart of another data transmission method according to an embodiment of this application;
FIG. 6A to FIG. 6E are a schematic flowchart of another data transmission method according to an embodiment of this application;
FIG. 7 is a block diagram of a data transmission apparatus according to an embodiment of this application; and
FIG. 8 is a block diagram of another data transmission apparatus according to an embodiment of this application.

### DESCRIPTION OF EMBODIMENTS

The following describes technical solutions of this application with reference to accompanying drawings.

In embodiments of this application, terms such as "first" and "second" are used to distinguish between same items or similar items having basically same functions and roles. For example, the first chip and the second chip are merely used to distinguish different chips, and a sequence of the first chip and the second chip is not limited. A person skilled in the art may understand that the terms such as "first" and "second" do not limit a quantity or an execution sequence, and the terms such as "first" and "second" do not indicate a definite difference.

It should be noted that in embodiments of this application, the word like "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the word like "example" or "for example" is intended to present a related concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

To address challenges from wireless broadband technologies and maintain the leading edge of 3rd generation partnership project (3rd generation partnership project, 3GPP) networks, the 3GPP standards group formulated a next generation mobile communication network architecture (next generation system) at the end of 2016, which is referred to as a 5th generation mobile communication technology (5th generation mobile communication technology, 5G) network architecture.

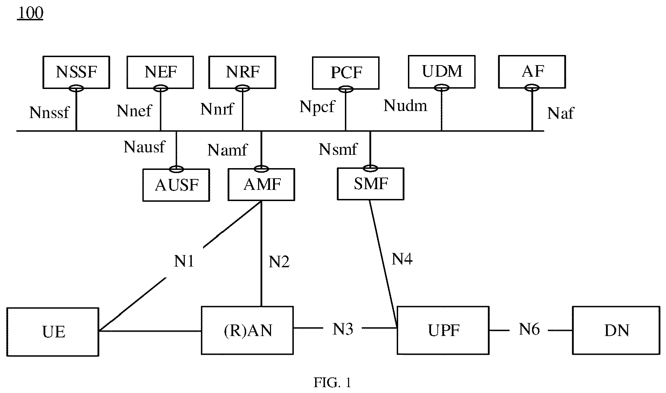

FIG. 1 is a diagram of a network architecture 100 of a 5G communication system. The network architecture 100 includes a terminal device, an access network device, a core network element, and a data network.

The terminal device in embodiments of this application may also be referred to as user equipment (user equipment, UE), a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like. In FIG. 1, an example in which the terminal device is user equipment (user equipment, UE) is used.

The terminal device may be a device that provides voice/data connectivity for a user, for example, a handheld device or a vehicle-mounted device with a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, in embodiments of this application, the terminal device may alternatively be a terminal device in an internet of things (internet of things, IoT) system. The IoT is an important part of future development of information technologies, and a main technical feature of the IoT is to connect things to a network by using a communication technology, to implement an intelligent network for interconnection between a person and a machine or between things.

In addition, the access network (access network, AN) device in embodiments of this application may be a device configured to communicate with a terminal device. The access network device may also be referred to as a radio access network (radio access network, RAN) device, and may be a transmission reception point (transmission reception point, TRP), or may be an evolved NodeB (evolved NodeB, eNB or eNodeB) in an LTE system, or may be a home NodeB (for example, a home evolved NodeB, or a home NodeB, HNB) or a baseband unit (baseband unit, BBU), or may be a radio controller in a cloud radio access network (cloud radio access network, CRAN) scenario. Alternatively, the access network device may be a relay station, an access point, a vehicle-mounted device, a wearable device, a network device in the 5G network, a network device in the future evolved PLMN network, or the like, or may be an access point (access point, AP) in a WLAN, or may be a gNB in a new radio (new radio, NR) system, or may be a satellite base station in a satellite communication system, or the like. This is not limited in embodiments of this application.

In a network structure, the access network device may include a central unit (centralized unit, CU) node, a distributed unit (distributed unit, DU) node, a RAN device including a CU node and a DU node, or a RAN device including a CU control plane node (CU-CP node), a CU user plane node (CU-UP node), and a DU node.

The access network device provides a cell with a service, and the terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and a low transmit power, and are applicable to providing a high-rate data transmission service.

The data network (data network, DN) provides services for user equipment, for example, provides a mobile operator service, an internet service, or a third-party service.

In addition, core network functions of the network architecture 100 are divided into a user plane function UPF and a control plane function (control plane function, CP). The user plane function is mainly responsible for data packet forwarding, quality of service (quality of service, QoS) control, charging information statistics collection, and the like. The control plane function is mainly responsible for user registration and authentication, mobility management, delivery of data packet forwarding policies and QoS control policies to the user plane function (UPF), and the like. Control plane function network elements include but are not limited to an access and mobility management function (access and mobility management function, AMF) network element, a session management function SMF network element, an authentication service function (authentication server function, AUSF) network element, a network slice selection function (network slice selection function, NSSF) network element, a network exposure function (network exposure function, NEF) network element, a network repository function (network repository function, NRF) network element, a policy control function (policy control function, PCF) network element, a unified data management (unified data management, UDM) network element, and an application function (application function, AF) network element.

Functions of the network elements in the network architecture 100 shown in FIG. 1 are described in detail below. Because the related functions of the UE, the (R)AN, and the DN have been described above, the following focuses on functions of core network elements.

A UPF network element is a user plane function entity. As an interface to the data network, the UPF implements user plane data forwarding, session/flow level-based charging statistics collection, bandwidth limitation, and other functions. Specifically, the UPF may forward user data packets according to a routing rule of the SMF, for example, send uplink data to the DN or another UPF, or forward downlink data to another UPF or the RAN.

The AUSF network element is mainly responsible for performing authentication on user equipment and determining validity of the user equipment.

The AMF network element is mainly configured to perform mobility management, access management, and the like. Specifically, the AMF is responsible for a registration procedure for user access and location management for user mobility. The UE may communicate with the AMF via an N1 non-access stratum (non-access stratum, NAS) message, or may perform forwarding via an N2 message of the RAN.

The SMF network element is responsible for establishing corresponding session connections on a network side when users initiate services, providing specific services for users, and in particular, delivering a data packet forwarding policy, a QoS policy, and the like to the UPF through an NG4 interface between the SMF and the UPF.

The NSSF network element determines, based on slice selection assistance information of the UE, subscription information, and the like, a network slice instance that the UE is allowed to access.

The NEF network element is responsible for managing open network data. All external applications need to access internal data of a 5G core network through the NEF. The NEF provides corresponding security assurance to ensure security of the external applications to a 3GPP network, and provides QoS customization capability exposure, mobility status event subscription, AF request distribution for the external applications, and the like.

The NRF network element has a network repository function, is responsible for network function service registration, status monitoring, and the like, to implement automatic management, selection, and scalability of a network function service, and allows each network function to discover a service provided by another network function.

The PCF network element provides service-related policy rule information and the like for a control plane function network element (for example, the AMF network element or the SMF network element).

The UDM network element is for unified user data management, and is mainly configured to store subscription data of user equipment.

The AF network element sends an application-related requirement to the PCF, so that the PCF generates a corresponding policy.

For ease of description, the UPF network element, the AUSF network element, the AMF network element, the SMF network element, the NSSF network element, the NEF network element, the NRF network element, the PCF network element, the UDM network element, and the AF network element are referred to as UPF, AUSF, AMF, SMF, NSSF, NEF, NRF, PCF, UDM, and AF for short below.

In the network architecture 100, an N1 interface is a signaling plane interface between the UE and the AMF, and is configured to exchange a signaling message between a core network and the UE, for example, the UE registers with and accesses a network, the UE establishes a protocol data unit PDU session, and the network side configures a UE policy.

An N2 interface is an interface between the (R)AN and the AMF, and is configured to transfer radio bearer control information from the core network to the RAN.

An N3 interface is an interface between the (R)AN and the UPF, and is configured to transfer user plane service data and the like between the RAN and the UPF.

The N4 interface is an interface between the SMF and the UPF, is configured to transfer information between a control plane and a user plane, is configured to transmit information such as tunnel identification information of an N3 connection, data buffering indication information, and a downlink data notification message, and is configured to control a terminal device to complete a network access operation based on subscription information with an operator.

An N6 interface is an interface between the UPF and the DN, and is configured to transfer service data of the UE between the UPF and the DN.

A5G network architecture not only supports access to a core network side by using wireless technologies defined by the 3GPP standards group, but also supports access to the core network side by using a non-3GPP (non-3GPP, N3G) access technology via a non-3GPP interworking function (non-3GPP interworking function, N3IWF) or a next-generation access gateway (next-generation packet data gateway, ngPDG).

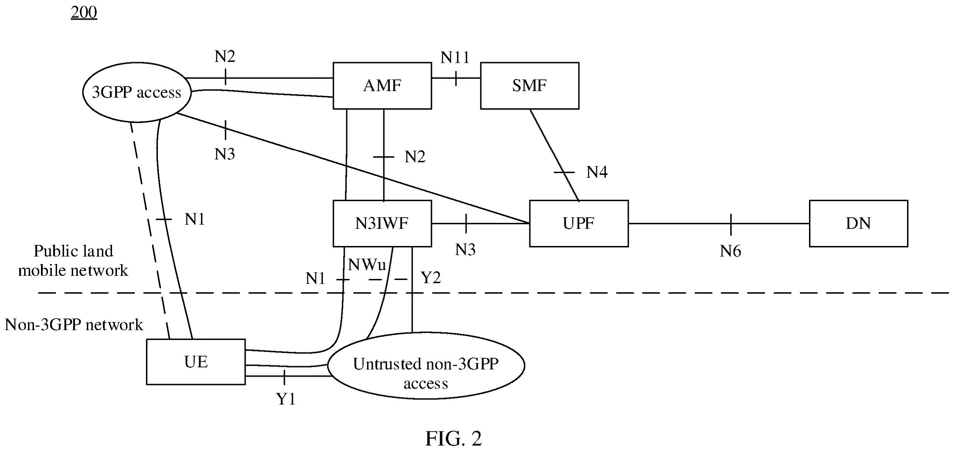

When the 5G core network supports untrusted non-3GPP access (untrusted non-3GPP access), a network architecture is shown in FIG. 2. The N3IWF is an untrusted non-3GPP access gateway, and an untrusted non-3GPP access network may be an untrusted wireless local area network (wireless local area network, WLAN) access network.

In addition, the 5G core network further supports trusted non-3GPP access and/or wired network access, where a trusted non-3GPP network includes a trusted WLAN network, and a wireline network includes fixed home network access and the like. A network side architecture is similar to an untrusted non-3GPP access architecture, with the untrusted non-3GPP access gateway (the N3IWF in FIG. 2) replaced with a trusted WLAN access gateway (trusted non-3GPP gateway function, TNGF) or a wireline access gateway (wireline access gateway function, W-AGF). Access network devices between the UE and the access gateway include a wireless local area network access point (wireless local area network access point, WLAN AP), a fixed access network (fixed Access network, FAN) device, a switch, a router, and the like.

In conclusion, the N3G access technology includes an access technology like trusted WLAN access, untrusted WLAN access, or wireline access. Regardless of the trusted non-3GPP access or the untrusted non-3GPP access, a point-to-point interface protocol shown in FIG. 2 may be used on a core network side, or a service-oriented interface is also used like the 3GPP access core network architecture shown in FIG. 1.

The foregoing content describes a network architecture in which a single terminal device accesses the 5G core network by using the 3GPP or non-3GPP access technology. In some scenarios, a plurality of terminal devices may form a group. For example, in a toC service, various terminal devices in a user family may form a group; and in a toB service, terminal devices of enterprise employees may form a group. The following describes a method for transmitting data between terminal devices by using an example in which the plurality of UEs form a PIN network. The PIN network may be a subnet formed by devices in a user family, or a subnet formed by terminal devices of an enterprise company.

To establish a connection between different members (namely, terminal devices) in a group, a 5G core network side stores member information (for example, IP addresses of the terminal devices) in a same PIN network. When the different members are connected to different UPFs, GTP-U tunnels between the different UPFs are established. Different GTP-U tunnels may be established for different PIN networks. Only different terminal devices belonging to a same PIN network can share a same GTP-U channel. After the GTP-U tunnels between the different UPFs are established, an SMF configures a routing policy on the UPF. A specific routing policy includes an IP address of a terminal device and GTP-U tunnel information corresponding to the IP address, and the GTP-U tunnel information may include a network address of the UPF. When forwarding a data packet from a terminal device, the UPF may determine a corresponding GTP-U tunnel based on an IP address of a destination terminal device of the data packet, and continue to transmit the data packet through the GTP-U tunnel.

However, a prerequisite of the foregoing method is that the SMF needs to configure a correspondence between the IP address of the terminal device and the tunnel on a UPF side, to be specific, the UPF needs to identify the IP address of the destination terminal device, and route the data packet based on the IP address of the terminal device. However, in some scenarios, for example, when the terminal device performs access at a campus, if the IP address of the destination terminal device is provided by a campus service provider, in other words, the IP address of the terminal device is an IP address of a private network terminal device, and the IP address of the private network terminal device is not expected to be identified by a UPF of an operator, the UPF cannot identify the IP address of the destination terminal device. Consequently, the UPF cannot continue to transmit data.

In view of this, this application provides a data transmission method. A first UPF identifies identification information in a received data packet to determine a destination UPF of the data packet, so that the destination UPF sends the data packet to a destination terminal device. This avoids a data transmission failure caused because the first UPF cannot identify an IP address of the destination terminal device in the data packet. This application helps implement smooth data transmission and improve data transmission efficiency when a UPF cannot identify an IP address of a terminal device.

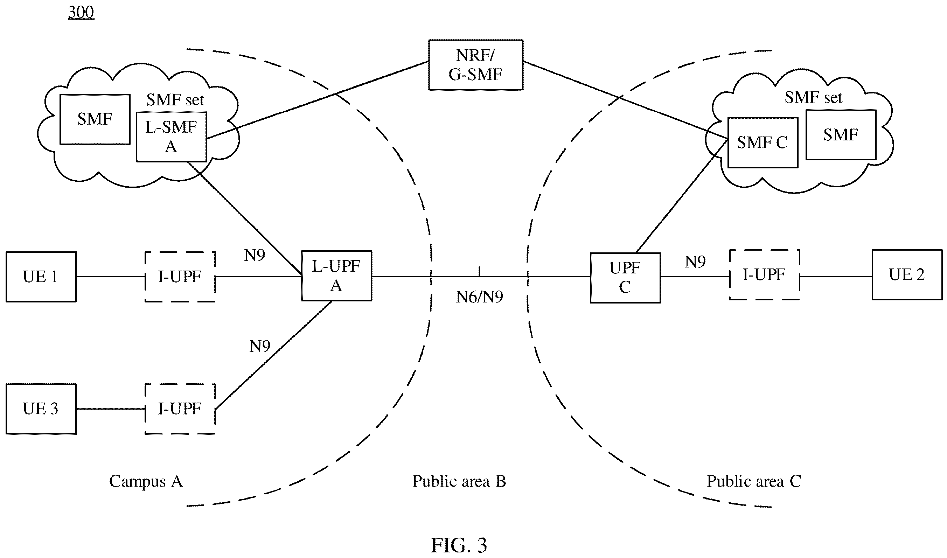

FIG. 3 is a diagram of an application scenario 300 according to an embodiment of this application. The following describes the application scenario 300.

The scenario 300 includes three areas: a campus A, a public area B, and a public area C. The campus A includes UE 1, UE 3, a local UPF (local UPF, L-UPF) A, a local SMF (local SMF, L-SMF) A, and a plurality of other SMFs. The plurality of SMFs may be referred to as an SMF set (SMF set), and the L-UPF A is a local UPF corresponding to the campus A. The UE 1 establishes a PDU session connection with the L-UPF A, and the UE 3 establishes a PDU session connection with the L-UPF A. The L-UPF A and the L-SMF may communicate with each other. The public area C includes UE 2, a UPF C, and a plurality of SMFs. The UPF C is a UPF corresponding to a campus C. The UE 2 establishes a PDU session with the UPF C, and the UPF C and an SMF C can communicate with each other. The L-UPF A in the campus A and the UPF C in the public area C may be connected through an N6 or N19 channel. The L-SMF A in the campus A and the SMF C in the campus C may communicate with an NRF/G-SMF. The UPF C may send a data packet from the UE 2 to the L-UPF A. After receiving the data packet, the L-UPF A sends the data packet to the UE 1. Similarly, the L-UPF A may send data from the UE 1 to the UE 2.

Optionally, a GTP-U tunnel may be formed between the L-UPF A and the UPF C.

Optionally, relay-UPFs (initial UPFs, I-UPFs) may be further included between the UE 1 and the L-UPF A, between the UE 3 and the L-UPF A, and between the UE 2 and the UPF C.

It should be understood that, in the foregoing scenario, only the campus A and the public area C are used as examples. The public area C may alternatively be the campus C, and the campus A may alternatively be the public area B. This is not limited in this application. It should be further understood that there may be a plurality of terminal devices, a plurality of UPFs, a plurality of SMFs, and a plurality of NRFs. This is not limited in embodiments of this application.

It should be understood that FIG. 3 is merely a diagram. The application scenario may further include other network devices, for example, an AMF, a base station, and a wireless relay device, which are not shown in FIG. 3.

The following describes in detail embodiments provided in this application.

In embodiments of this application, a first terminal device, a second terminal device, an SMF, a first UPF, and a second UPF are used as examples for description. It should be understood that the terminal device may be replaced with an apparatus or a chip that can implement a function similar to that of the terminal device, the SMF may also be replaced with an apparatus or a chip that can implement a function similar to that of the SMF, and the first UPF and the second UPF may also be replaced with apparatuses or chips that can implement functions similar to those of the first UPF and the second UPF. Names of the apparatuses or chips are not limited in embodiments of this application.

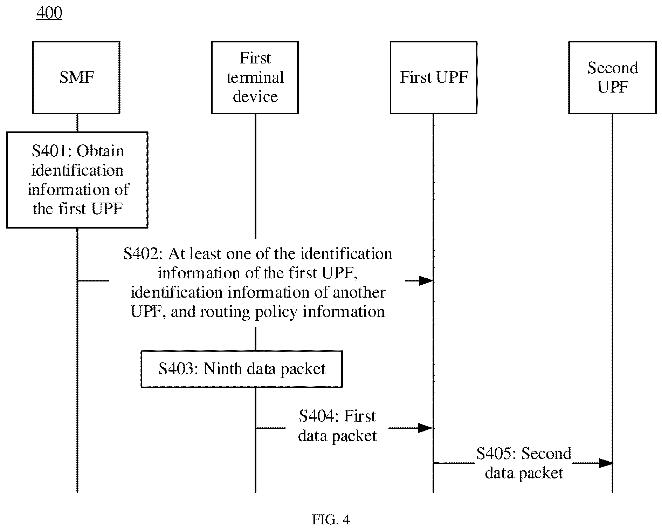

FIG. 4 is a schematic flowchart of a data transmission method 400 according to an embodiment of this application. The method may be applied to the foregoing scenario 300. A first terminal device may be the UE 1 in the scenario 300, a second terminal device may be the UE 2 in the scenario 300, an SMF may be the L-SMF A in the scenario 300, a first UPF may be the L-UPF A in the scenario 300, and a second UPF may be the UPF C in the scenario 300. The method 400 includes the following steps.

S401: The SMF obtains identification information of the first UPF.

It should be understood that identification information is used to identify a UPF, and each UPF corresponds to unique identification information. The identification information may also be referred to as a label, and the identification information may include data, a character string, and/or the like. For example, a label of the first UPF is 37598312a. It should be further understood that there are a plurality of methods for obtaining the identification information of the first UPF by the SMF. For example, the SMF may determine the identification information for the first UPF (for example, determine the identification information of the first UPF based on a static configuration), or may obtain the identification information of the first UPF through an NRF connected to the SMF or receive the identification information reported by the first UPF. This is not limited in embodiments of this application.

S402: The SMF sends at least one of the identification information of the first UPF, identification information of another UPF, and routing policy information to the first UPF, where the first UPF and the another UPF serve a same PIN network, the routing policy information includes first routing policy information and/or second routing policy information, the first routing policy information indicates the first UPF to include the identification information of the first UPF in an uplink data packet, and the second routing policy information indicates the first UPF to include the identification information of the another UPF in a downlink data packet. Correspondingly, the first UPF receives at least one of the identification information of the first UPF, the identification information of the another UPF, and the routing policy information.

It should be understood that the PIN network is a group or a subnet formed by a plurality of terminal devices. For example, the PIN network may be a subnet formed by home user equipments, or a subnet formed by enterprise user equipments. The PIN network may also be referred to as a PIN group.

It should be understood that the identification information of the another UPF may be obtained by the SMF through the NRF. The NRF has a storage function, and may store a network address of a UPF and identification information of the UPF. There is a correspondence between identification information of each UPF and a network address of the corresponding UPF, and there may be one or more other UPFs. The identification information of each UPF may be unique in an entire network, or may be unique in the PIN network. When the identification information of each UPF is unique in the PIN network, the NRF stores a correspondence between an identifier of the PIN network, the network address of the UPF, and the identification information of the UPF. The identifier of the PIN network may be a PIN ID, a PIN network name, or the like. This is not limited in embodiments of this application.

For example, when receiving a request message from the SMF, the NRF may query, based on the PIN ID carried in the request message, the network address of the UPF corresponding to the PIN network and the identification information of the corresponding UPF, and send the network address of the UPF corresponding to the PIN network and the identification information of the corresponding UPF to the SMF.

It should be further understood that the SMF may send the identification information of the first UPF, the identification information of the another UPF, and the routing policy information to the first UPF via different messages. For example, the SMF may send the routing policy information and the identification information of the first UPF to the first UPF via a first message (for example, a PFCP update request message), and send the identification information of the another UPF to the first UPF via a second message. If the first UPF has stored the identification information of the another UPF serving the same PIN network and the another UPF is not updated, the SMF does not need to send the identification information of the another UPF to the first UPF again. If the another UPF serving the same PIN network is updated (for example, a newly added UPF exists), the SMF sends identification information of the newly added UPF to the first UPF.

S403: The first terminal device receives a ninth data packet, where the ninth data packet carries a network address of the second terminal device.

For example, the ninth data packet is sent by the second UPF, the second UPF serves the second terminal device, and data content in the ninth data packet is sent by the second terminal device. A source network address of the data content is the network address of the second terminal device, and a destination network address is a network address of the first terminal device.

S404: The first terminal device sends a first data packet to the first UPF, where the first data packet carries identification information of the second UPF and the network address of the second terminal device. Correspondingly, the first UPF receives the first data packet.

It should be understood that the first terminal device may perform encapsulation processing on data content to obtain the first data packet, and a destination address of the first data packet is the network address of the second terminal device. The foregoing encapsulation processing may be carrying the identification information of the second UPF in an encapsulated data packet header. In other words, a header of the first data packet carries the identification information of the second UPF.

S405: The first UPF sends a second data packet to the second UPF based on the identification information of the second UPF, where the second UPF is a UPF serving the second terminal device, and the second data packet carries the identification information of the first UPF and the network address of the second terminal device.

It should be understood that the first data packet and the second data packet include same data content.

It should be understood that, in S402, the SMF sends the identification information of the another UPF to the first UPF, and there is the correspondence between the identification information of each UPF and the network address of the corresponding UPF. The first UPF may determine, based on the identification information of the second UPF carried in the first data packet, that the first data packet is sent to the second UPF, and send the second data packet to the second UPF based on a network address of the second UPF. The second data packet may be a packet in which the network address of the second UPF and the identification information of the first UPF are encapsulated at an outer layer of the first data packet. Optionally, the identification information of the second UPF is deleted from the first data packet. Through the foregoing processing, when sending a reply data packet to the first terminal device, the second terminal device may include the identification information of the first UPF. When receiving the reply data packet, the second UPF corresponding to the second terminal device may determine, by identifying the identification information of the first UPF, to send the reply data packet to the first UPF.

According to the data transmission method in this embodiment of this application, the first UPF identifies identification information in a received data packet to determine a destination UPF of the data packet, so that the destination UPF sends the data packet to a destination terminal device. This avoids a data transmission failure caused because the first UPF cannot identify an IP address of the destination terminal device in the data packet. This embodiment of this application helps implement smooth data transmission and improve data transmission efficiency when a UPF cannot identify an IP address of a terminal device.

Optionally, the first terminal device and the second terminal device belong to a same PIN network.

It should be understood that the PIN network may further include another terminal device.

Further, the method 400 may further include the following step.

S406: The second UPF receives the second data packet, and the second UPF sends a tenth data packet to the second terminal device based on the network address of the second terminal device, where the tenth data packet carries the identification information of the first UPF. Correspondingly, the second terminal device receives the tenth data packet.

It should be understood that the tenth data packet is obtained by performing decapsulation processing on the second data packet by the second UPF, to be specific, obtained by deleting the network address of the second UPF from the second data packet. In addition, the decapsulation processing may further include parsing processing. The second UPF may parse the second data packet to obtain the identification information of the first UPF, and encapsulate the identification information of the first UPF into a header of the tenth data packet.

Optionally, the identification information of the first UPF in S401 is determined by one of the SMF, the NRF, or the first UPF.

A method for determining the identification information of the first UPF by the SMF is as follows:

In a possible implementation, in a process in which the first terminal device establishes a PDU session connection with the first UPF through the SMF, after determining that the first UPF serves the first terminal device, the SMF allocates the identification information to the first UPF.

In another possible implementation, when the SMF establishes a connection to the first UPF for the first time, the SMF allocates the identification information to the first UPF.

A method for determining the identification information of the first UPF by the NRF is as follows:

In the process in which the first terminal device establishes the PDU session connection with the first UPF through the SMF, after determining that the first UPF serves the first terminal device, the SMF may send a request message to the NRF connected to the SMF, where the message carries a network address of the first UPF, an FQDN of the first UPF, or a device name of the first UPF. After receiving the request message, the NRF searches for or allocates the identification information of the first UPF based on the network address, the FQDN, or the device name of the first UPF, and sends the identification information to the SMF.

A method for determining the identification information of the first UPF by the first UPF is as follows:

In a possible implementation, in the process in which the first terminal device establishes the PDU session connection with the first UPF through the SMF, after determining that the first UPF serves the first terminal device, the SMF needs to send a PFCP session request message to the first UPF. After receiving the message, the first UPF determines the identification information of the first UPF, and includes the identification information of the first UPF in a response message sent to the SMF.

In another possible implementation, when the first UPF establishes a connection to the SMF for the first time, the first UPF determines the identification information of the first UPF, and sends the identification information of the first UPF to the SMF.

In an optional embodiment, the method 400 further includes: The SMF sends a first correspondence to the first terminal device, where the first correspondence includes a correspondence between identification information of at least one UPF and a network address of at least one terminal device served by the UPF. Correspondingly, the first terminal device receives the first correspondence from the SMF.

It should be understood that the first correspondence is sent, to the SMF, by the NRF connected to the SMF. The NRF has the storage function, and may store the network address or an FQDN or a device name of the UPF, the identification information of the UPF, and a network address of at least one terminal device served by the UPF (or referred to as a network address segment corresponding to the terminal device served by the UPF). There is a first correspondence between the identification information of the UPF and the network address of the at least one terminal device served by the UPF. The network address of the terminal device may be allocated by the SMF or the UPF. When the network address of the terminal device is allocated by the UPF, the UPF sends the allocated network address to the SMF connected to the UPF.

For example, the first correspondence may include a correspondence between the identification information of the second UPF and the network address of the second terminal device served by the second UPF. The first correspondence may include a correspondence between the identification information of the second UPF, the network address of the second terminal device served by the second UPF, and a network address of a third terminal device. The first correspondence may include the correspondence between the identification information of the second UPF, the network address of the second terminal device served by the second UPF, and the network address of the third terminal device, and further include a correspondence between identification information of a third UPF and a network address of a fourth terminal device served by the third UPF.

It should be understood that the first terminal device may determine, based on the first correspondence by identifying a network address of a destination terminal device of to-be-sent data content, identification information of a UPF corresponding to the network address of the destination terminal device, and encapsulate the identification information of the corresponding UPF into the data content. For example, the first terminal device identifies a destination address of the to-be-sent data content, namely, the network address of the second terminal device, determines the identification information of the second UPF based on the first correspondence, and encapsulates the identification information of the second UPF into the to-be-sent data content.

Optionally, before S404 in which the first UPF receives the first data packet from the first terminal device, the method further includes: The first UPF receives a third data packet from the second UPF, where the third data packet carries the identification information of the second UPF and a network address corresponding to a destination UPF, a destination address of the third data packet is the network address corresponding to the destination UPF, and the destination UPF includes the first UPF; and the first UPF sends a fourth data packet to the first terminal device, where the fourth data packet carries the identification information of the second UPF.

It should be understood that the third data packet may be sent by the second UPF to destination UPFs in a broadcast manner, and the first UPF is one of the destination UPFs. The network address corresponding to the destination UPF may be a specific broadcast or multicast network address. The second UPF may send, by identifying the specific broadcast or multicast network address, the third data packet to a plurality of destination UPFs corresponding to the specific network address. In addition, the network address corresponding to the destination UPF may alternatively be a network address of one UPF. For example, if the network address corresponding to the destination UPF is the network address of the first UPF, the second UPF sends the third data packet to the first UPF, and terminal device served by the destination UPF and the second UPF belong to a same PIN group.

It should be further understood that, after receiving the third data packet from the second UPF, the first UPF performs decapsulation processing on the third data packet to obtain the fourth data packet, where the decapsulation processing includes deleting the network address corresponding to the destination UPF in the third data packet and/or parsing the third data packet to obtain the identification information of the second UPF; and the first UPF encapsulates the identification information of the second UPF into the fourth data packet. The fourth data packet and the third data packet include same data content. The data content is sent by the second terminal device. The data content may be sent by the second terminal device to the first terminal device, or may be sent by the second terminal device to various terminal devices (including the first terminal device) in the PIN network. When the data content is sent by the second terminal device to the first terminal device, a network address of a destination terminal device corresponding to the data content is the network address of the first terminal device. The first UPF may send the fourth data packet to the first terminal device based on the network address of the first terminal device. When the data content is sent by the second terminal device to the various terminal devices in the PIN network, a network address of a destination terminal device corresponding to the data content is a specific multicast or broadcast network address. The first UPF may send the fourth data packet to the first terminal device based on the specific multicast or broadcast network address.

Optionally, before the first terminal device sends the first data packet to the first UPF in S404, the method further includes: The first terminal device determines the identification information of the second UPF corresponding to the destination address of the first data packet.

The first terminal device may determine, by using the following two methods, the identification information of the second UPF corresponding to the destination address of the first data packet.

In a possible implementation, the first terminal device determines the identification information of the second UPF based on the first correspondence, where the first correspondence includes the correspondence between the identification information of the at least one UPF and the network address of the at least one terminal device served by the UPF.

Optionally, the first correspondence is received by the first terminal device from the SMF.

For example, the first correspondence includes the correspondence between the identification information of the second UPF and the network address of the second terminal device served by the second UPF. The first terminal device determines, based on the first correspondence by identifying the destination address of the first data packet, namely, the network address of the second terminal device, that the destination address of the first data packet corresponds to the identification information of the second UPF.

In another possible implementation, the ninth data packet carries the identification information of the second UPF.

For example, the ninth data packet may be sent by the second terminal device to the first terminal device through the second UPF and the first UPF. When the ninth data packet passes through the second UPF, the second UPF encapsulates a label of the second UPF into a header of the ninth data packet and sends the ninth data packet to the first UPF; and then the first terminal device sends the ninth data packet to the first terminal device. The first data packet may be a reply data packet sent by the first terminal device to the second terminal device. The reply data packet carries a source network address, namely, the network address of the first terminal device, and a destination network address, namely, the network address of the second terminal device. When sending the reply data packet to the second terminal device, the first terminal device may determine the identification information of the second UPF corresponding to the destination address of the first data packet, and include the identification information of the second UPF in the reply data packet.

Optionally, the first data packet in S404 carries the identification information of the second UPF. The identification information of the second UPF is included in any one of the following headers of the first data packet: an Ethernet header, an internet protocol IP header, or a packet data convergence protocol PDCP header.

It should be understood that, if a PDU session established between the first terminal device and the first UPF is an IP session, the identification information of the second UPF may be carried in the IP header of the first data packet. If the PDU session established between the first terminal device and the first UPF is an Ethernet session, the identification information of the second UPF may be carried in the Ethernet header of the first data packet. If the PDU session established between the first terminal device and the first UPF is an unstructured session, a protocol header may be newly added, and the newly added header carries the identification information of the second UPF. In another possible implementation, a label may be carried in the PDCP header of the first data packet. After receiving the first data packet, an access network device obtains the identification information of the second UPF carried in the PDCP header, includes the identification information of the second UPF in a GTP-U header, and sends the first data packet to the first UPF.

In S405, the second data packet carries the identification information of the first UPF and the network address of the second terminal device.

Optionally, the identification information of the first UPF is included in any one of the following headers of the second data packet: an internet protocol IP header, a virtual extensible local area network VXLAN header, a general packet radio service tunnelling protocol for user plane GTP-U header, or an IP security IPsec header.

It should be understood that the first UPF may include the identification information of the first UPF in an option parameter of the IP header, for example, include the identification information of the first UPF in a routing option parameter, or include the identification information of the first UPF in a flow identification parameter. When the first UPF encapsulates data content in a VXLAN manner, the first UPF may encapsulate a VXLAN header, a user datagram protocol UDP header, and an IP header at an outer layer of the data content, and include the identification information of the first UPF in the VXLAN header. When the first UPF transmits a data packet through a GTP-U channel, a GTP-U header, a UDP header, and an IP header may be encapsulated outside data content, and the GTP-U header carries the identification information of the first UPF. When the first UPF performs IPsec encapsulation on data content, the identification information of the first UPF may be carried in an IPsec ESP header, or the identification information of the first UPF may be carried in an IP header.

Optionally, the identification information of the first UPF may be further included in a generic routing encapsulation (generic routing encapsulation, GRE) protocol header of the second data packet. For example, a GRE key (a GRE key for short) is set to the identification information of the first UPF.

In an optional embodiment, the second data packet in S405 carries the identification information of the second UPF and the network address of the second terminal device.

It should be understood that the identification information of the second UPF in the first data packet may not be deleted, and no identification information of the first UPF is encapsulated at the outer layer of the first data packet. Instead, only the network address of the second UPF is encapsulated at the outer layer of the first data packet, to obtain the second data packet, so that the second data packet still carries the identification information of the second UPF.

In an optional embodiment, the second data packet in S405 carries the network address of the second terminal device.

It should be understood that the identification information of the second UPF in the first data packet may be deleted, and no identification information of the first UPF is encapsulated at the outer layer of the first data packet. Instead, only the network address of the second UPF is encapsulated at the outer layer of the first data packet, to obtain the second data packet, so that the second data packet does not carry identification information of any UPF.

Optionally, the method further includes: The first UPF receives a fifth data packet from the first terminal device, where the fifth data packet carries the network address of the second terminal device; and the first UPF sends a sixth data packet to the destination UPF, where the sixth data packet carries the identification information of the first UPF, the network address corresponding to the destination UPF, and the network address of the second terminal device, and the network address corresponding to the destination UPF is a destination address of the sixth data packet.

It should be understood that the network address corresponding to the destination UPF is the specific broadcast or multicast network address. The first UPF may send, by identifying the specific broadcast or multicast network address, the sixth data packet to a plurality of UPFs corresponding to the specific network address. Terminal devices served by the plurality of UPFs and the first terminal device belong to the same PIN group. After receiving the sixth data packet, the plurality of UPFs identify the network address of the second terminal device, and the UPF serving the second terminal device sends the sixth data packet to the second terminal device.

Optionally, the method further includes: The first UPF receives a seventh data packet from the first terminal device; the first UPF determines, based on the seventh data packet, that the seventh data packet is a broadcast packet or a multicast packet; and the first UPF sends an eighth data packet to the destination UPF, where the eighth data packet carries the identification information of the first UPF and the network address corresponding to the destination UPF, and the network address corresponding to the destination UPF is a destination address of the eighth data packet.

In a possible implementation, the seventh data packet is the multicast packet or the broadcast packet, and a destination network address (for example, an IP address or a MAC address) of the broadcast packet or the multicast packet is a specific multicast or broadcast network address different from that of a unicast packet. The first UPF may determine, based on the destination network address of the seventh data packet, that the seventh data packet is the broadcast packet or the multicast packet, make multiple copies of the seventh data packet, and separately perform encapsulation processing on the plurality of seventh data packets, to be specific, separately encapsulate a network address of one UPF in the destination UPFs and the identification information of the first UPF at an outer layer of each seventh data packet, to obtain a plurality of eighth data packets. A terminal device corresponding to the destination UPF and the first terminal device belong to the same PIN group. The first UPF sends the plurality of eighth data packets to the corresponding destination UPFs. When the plurality of UPFs receive the corresponding eighth data packets, each UPF performs decapsulation processing on the corresponding eighth data packet, and sends the corresponding decapsulated data packet to a corresponding terminal device in the same PIN group by identifying a specific multicast or broadcast network address. For example, the second terminal device corresponding to the second UPF and the first terminal device belong to the same PIN group. The first UPF encapsulates the network address of the second UPF and the identification information of the first UPF in a first seventh data packet, to obtain the eighth data packet. The network address of the second UPF is the destination address of the eighth data packet. After receiving the eighth data packet, the second UPF performs decapsulation on the eighth data packet, to be specific, deletes the network address of the second UPF, and sends the decapsulated data packet to the second terminal device by identifying the specific network address of the broadcast packet or the multicast packet.

In another possible implementation, the seventh data packet is the multicast packet or the broadcast packet, and a destination network address of the broadcast packet or the multicast packet is a specific network address different from that of a unicast packet. The first UPF may determine, based on the destination network address of the seventh data packet, that the seventh data packet is the broadcast packet or the multicast packet. The first UPF performs encapsulation processing on the seventh data packet, to be specific, encapsulates the network address corresponding to the destination UPF and the identification information of the first UPF at an outer layer of the seventh data packet, to obtain the eighth data packet. The network address corresponding to the destination UPF is also a specific network address corresponding to the broadcast packet or the multicast packet. The first UPF may send the eighth data packet to the plurality of corresponding UPFs by identifying the network address corresponding to the destination UPF. Terminal devices served by the first UPF and the plurality of UPFs belong to the same PIN group. After receiving the eighth data packet, the plurality of UPFs separately perform decapsulation on the eighth data packet, to be specific, delete the network address corresponding to the destination UPF, and send the decapsulated data packet to the corresponding terminal devices in the same PIN group by identifying a specific multicast or broadcast network address corresponding to the seventh data packet.

Optionally, the method further includes: The first UPF determines the network address of the destination UPF and/or identification information of the destination UPF based on a PIN identifier of the PIN network.

It should be understood that the first UPF may receive a data packet from the first terminal device, and the data packet is sent by the first terminal device to the first UPF via a PDU session corresponding to the PIN group. Therefore, after receiving the data packet, the first UPF may determine the PIN group corresponding to the data packet, and determine a network address of another UPF serving the PIN network and/or identification information of the another UPF based on an identifier of the PIN group (for example, a PIN ID or a PIN group name). This is not limited in embodiments of this application. In addition, the first UPF may alternatively determine, based on a unique special data network name corresponding to the PIN group, the network address of the another UPF serving the PIN network and/or the identification information of the another UPF. The another UPF may be a destination UPF. In the process in which the first terminal device establishes the PDU session connection with the first UPF through the SMF, a PFCP session request message sent by the SMF to the first UPF carries PIN group information corresponding to the PDU session, for example, the PIN ID, or a data network name (DNN) and/or slice information corresponding to the PIN group. Therefore, the first UPF may determine, by identifying the PDU session for transmitting the data packet, the PIN group corresponding to the data packet.

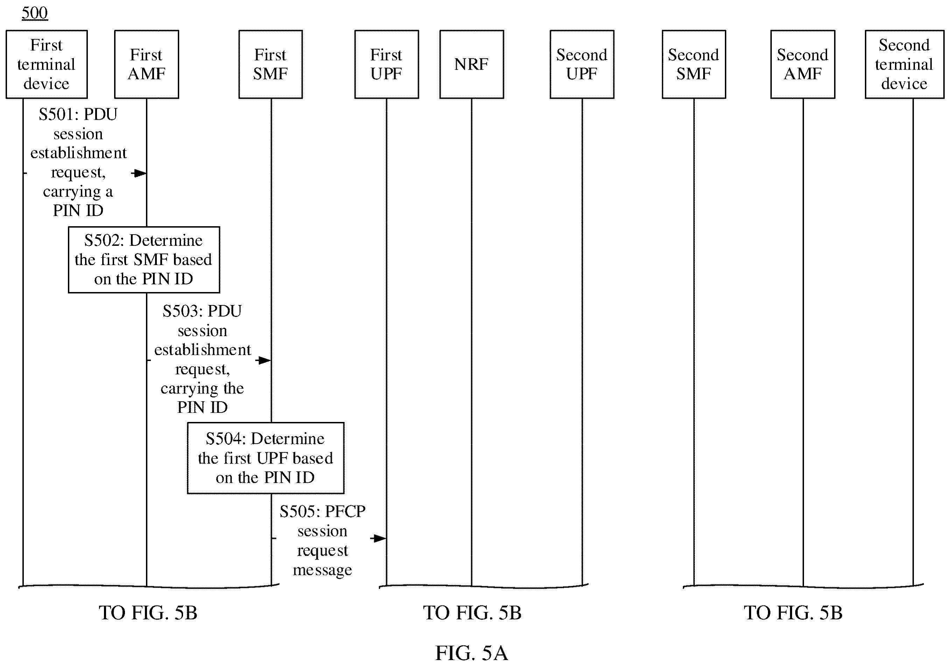

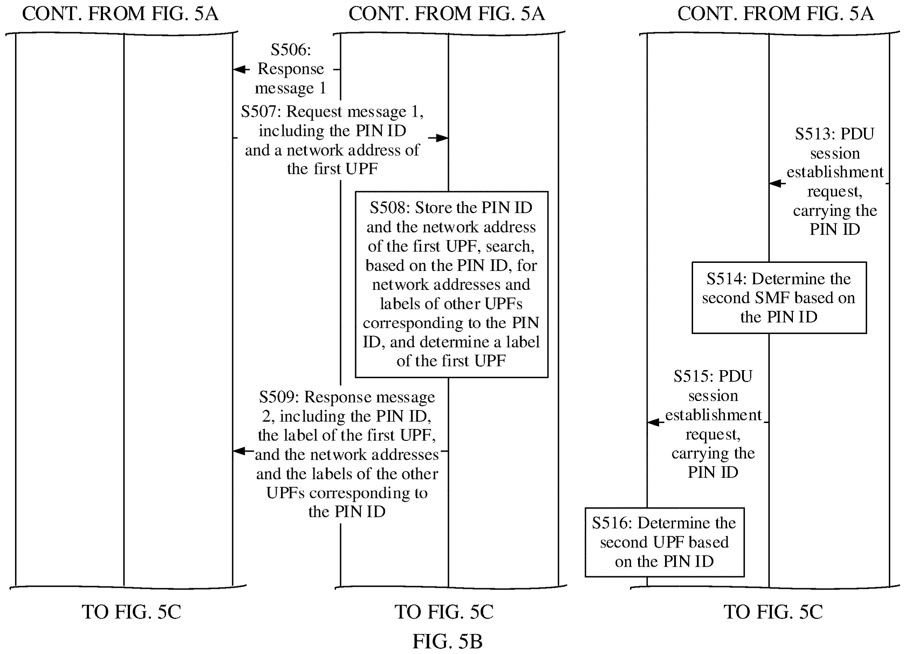

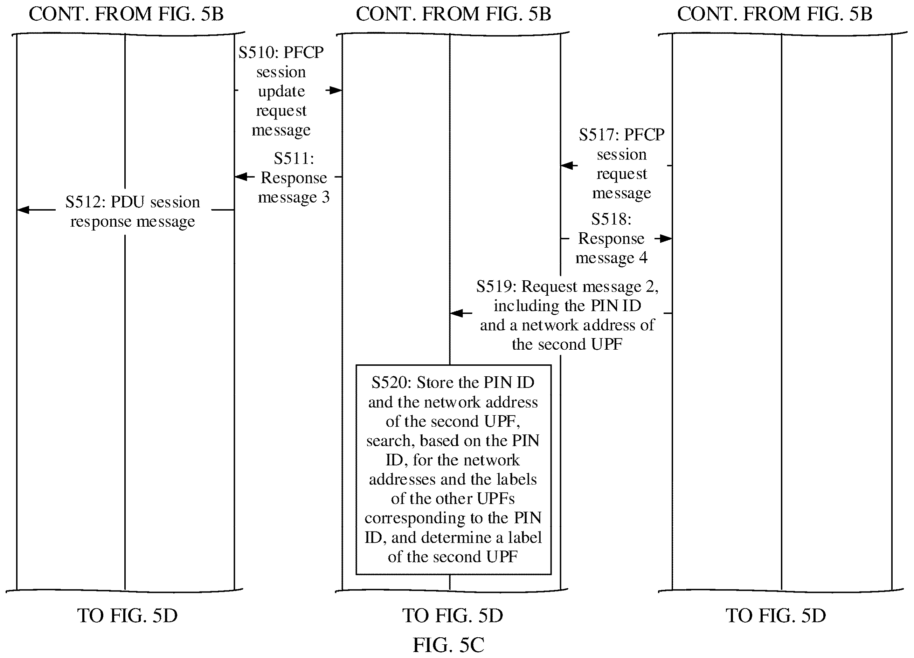

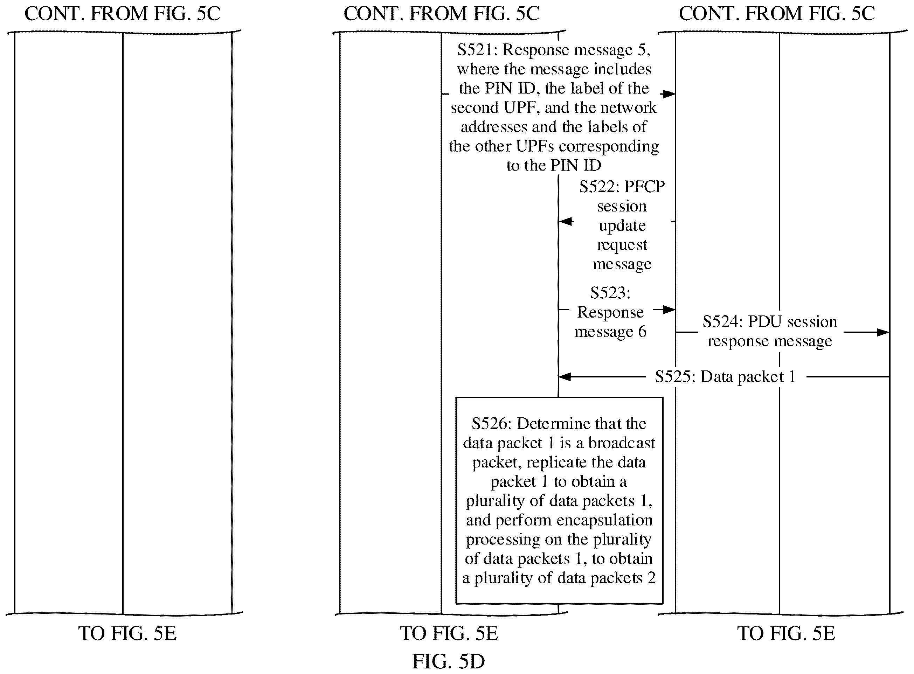

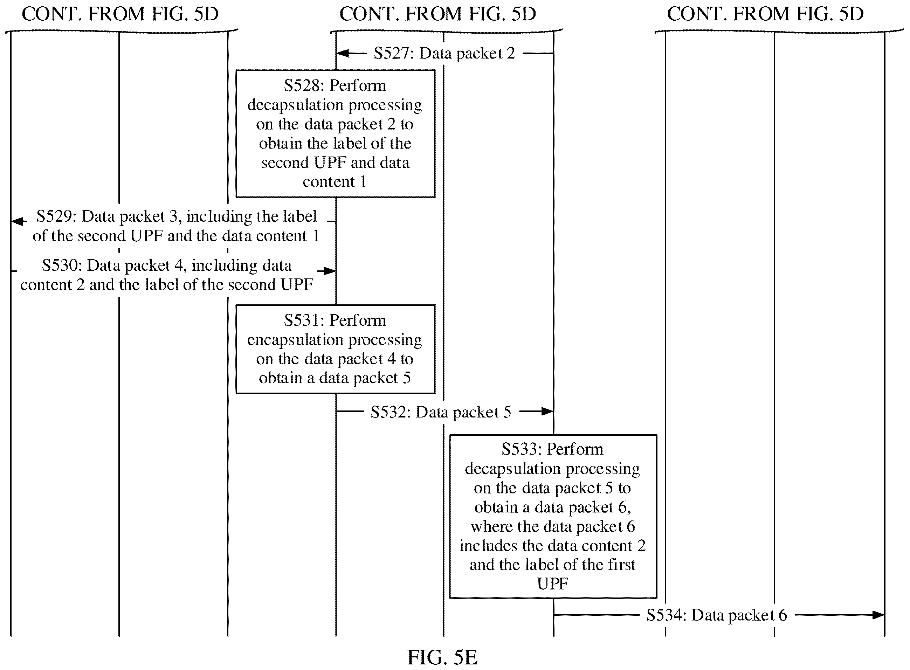

The following describes a data transmission method 500 in this application with reference to FIG. 5A to FIG. 5E by using an example in which a first terminal device and a second terminal device belong to a same PIN network and identification information of a UPF is a label. The method may be applied to the scenario 300. The first terminal device may be the UE 1 in the scenario 300, the second terminal device may be the UE 2 in the scenario 300, a first SMF may be the L-SMF A in the scenario 300, a second SMF may be the SMF C in the scenario 300, a first UPF may be the L-UPF A in the scenario 300, and a second UPF may be the UPF C in the scenario 300. The method 500 includes the following steps.

S501: The first terminal device sends a PDU session establishment request to a first AMF, where the session establishment request is used to request to establish a PDU session connection of the first terminal device, the session establishment request carries a PIN ID, and the PIN ID is identification information of the PIN network to which the first terminal device and the second terminal device belong. Correspondingly, the first AMF receives the PDU session establishment request from the first terminal device.

It should be understood that the PDU session establishment request may be carried in an uplink non-access stratum transport message, and the non-access stratum transport message may also carry at least one of the PIN ID, a data network name, and a network slice. The data network name or the network slice may also be used to determine the PIN group corresponding to a PDU session. For example, the PIN ID is determined based on the network name or the network slice. In this embodiment of this application, only an example in which the session establishment request message carries the PIN ID is used. This is not limited in embodiments of this application. The following PIN ID may be replaced with the data network name and/or network slice information.

S502: The first AMF determines the first SMF based on the PIN ID.

It should be understood that the AMF stores a correspondence between the PIN ID and the SMF, and the AMF may select the first SMF based on the PIN ID. The first AMF may further determine the SMF based on the data network name or the network slice.

S503: The first AMF sends the PDU session establishment request to the first SMF, where the session establishment request carries the PIN ID. Correspondingly, the first SMF receives the PDU session establishment request.

S504: The first SMF determines the first UPF based on the PIN ID.

It should be understood that the first SMF stores a network address of a UPF corresponding to the PIN ID, and the first SMF may select and determine the first UPF from the UPF corresponding to the PIN ID. When the UPF corresponding to the PIN ID is unavailable (for example, the UPF and the SMF belong to different areas), the SMF may alternatively select a local UPF. It should be further understood that the network address of the UPF may be an IP address, or may be a domain name of the UPF. In addition, the first SMF may further send a request message to an NRF, where the request message carries the PIN ID. When the NRF stores the network address of the UPF corresponding to the PIN ID, the NRF determines the first UPF based on the PIN ID, and sends a network address of the first UPF to the SMF. When the NRF does not store the network address of the UPF corresponding to the PIN ID, the NRF may determine the first UPF based on the data network name and/or the network slice corresponding to the PIN group, and send a network address of the first UPF to the first SMF.

S505: The first SMF sends a PFCP session request message to the first UPF, where the session request message carries the PIN ID and a network address of the first terminal device. Correspondingly, the first UPF receives the PFCP session request message.

S506: The first UPF sends a response message 1 to the first SMF. Correspondingly, the first SMF receives the response message 1.

S507: The first SMF sends a request message 1 to the NRF, where the request message 1 includes the PIN ID and the network address of the first UPF, and the network address of the first UPF includes an IP address of the first UPF. Correspondingly, the NRF receives the request message 1 from the first SMF.

S508: The NRF stores the PIN ID and the network address of the first UPF, and searches, based on the PIN ID, for network addresses and labels of other UPFs corresponding to the PIN ID, and the NRF determines a label of the first UPF.

Optionally, the NRF may alternatively not determine the label of the first UPF.

S509: The NRF sends a response message 2 to the first SMF, where the response message 2 includes the PIN ID, the label of the first UPF, and the network addresses and the labels of the other UPFs corresponding to the PIN ID, and the network addresses of the other UPFs corresponding to the PIN ID form a UPF network address list. Correspondingly, the first SMF receives the response message 2.

It should be understood that, when the NRF does not determine the label of the first UPF, the NRF sends the response message 2 to the first SMF. The response message 2 includes the PIN ID, and the network addresses and the labels of the other UPFs corresponding to the PIN ID. Correspondingly, the first SMF receives the response message 2, and the first SMF determines the label of the first UPF, and sends the label of the first UPF to the NRF.

S510: The first SMF sends a PFCP session update request message to the first UPF, where the PFCP session update request message includes a routing policy, the label of the first UPF, the UPF network address list, and a label of each UPF in the UPF network address list. Correspondingly, the first UPF receives the PFCP session update request message.

It should be understood that the routing policy information includes first routing policy information and second routing policy information, the first routing policy information indicates the first UPF to include the label of the first UPF in an uplink data packet, and the second routing policy information indicates the first UPF to include the labels of the other UPFs in a downlink data packet.

It should be understood that, when the first UPF has stored the UPF network address list corresponding to the PIN network and the label of each UPF in the UPF network address list, the first SMF does not need to send the UPF network address list and the label of each UPF in the UPF network address list to the first UPF. When the UPF network address list is updated, the first SMF also needs to send corresponding update information to the first UPF.

S511: The first UPF sends a response message 3 to the first SMF. Correspondingly, the first SMF receives the response message 3.

S512: The first SMF sends a PDU session response message to the first terminal device.

It should be understood that a PDU session established between the first terminal device and the first UPF is a PDU session corresponding to the PIN group.

S513 to S524 are a process in which the second terminal device establishes a PDU session. The process in which the second terminal device establishes the PDU session is consistent with the process in S501 to S512. To avoid repetition, details are not described herein again.

It should be understood that the corresponding first SMF in S501 to S512 and the corresponding second SMF in S513 to S524 may be different SMFs, or may be a same SMF.

S525: The second terminal device sends a data packet 1 including data content 1 to the second UPF, where the data packet 1 is a broadcast packet, and a destination address of the data packet 1 is a specific network address corresponding to the broadcast packet. Correspondingly, the second UPF receives the data packet 1.

It should be understood that the destination address of the data packet 1 is a destination address of the data content 1.

S526: The second UPF determines, based on the destination address of the data packet 1, that the data packet 1 is the broadcast packet, replicates the data packet 1 to obtain a plurality of data packets 1, and performs encapsulation processing on each data packet 1, to be specific, encapsulates a network address of one UPF in destination UPFs, a network address of the second UPF, and a label of the second UPF at an outer layer of each data packet 1, to obtain a plurality of data packets 2. The network address of the second UPF is used as a source address of the data packet 2, and the network address of the UPF in the destination UPFs is a destination address of the data packet 2. The UPF network address list includes the first UPF.

It should be understood that the destination UPF is a UPF in the network address list, that is, a UPF corresponding to another terminal device in the PIN network. It should be further understood that the data packet 1 is sent by the second terminal device to the second UPF via the PDU session corresponding to the PIN group. Therefore, after receiving the data packet 1, the second UPF may determine the PIN group corresponding to the data packet 1, and determine, based on a PIN ID corresponding to the PIN group, a network address list corresponding to the PIN group. The data packet 1 and the data packet 2 include same data content 1.

S527: The second UPF sends the data packet 2 to each UPF in the UPF network address list based on a destination UPF address in each data packet 2. Correspondingly, each UPF in the UPF network address list receives the data packet 2.

S528: After receiving the data packet 2 from the second UPF, the first UPF performs decapsulation processing on the data packet 2, to be specific, deletes the source address of the data packet 2, namely, the network address of the second UPF, and the destination address of the data packet 2, namely, the network address of the first UPF, to obtain the label of the second UPF and the data content 1.

It should be understood that the first UPF is one UPF in the network address list, and the other UPFs in the network address list may also receive the data packet 2.

S529: The first UPF sends a data packet 3 to the first terminal device based on the destination address corresponding to the data content 1, that is, the specific network address corresponding to the broadcast packet, where the data packet 3 includes the data content 1 and the label of the second UPF. Correspondingly, the first terminal device receives the data packet 3.

S530: The first terminal device sends a data packet 4 to the first UPF, where the data packet 4 includes data content 2 and the label of the second UPF, the data content 2 is reply data content of the data content 1, and a destination address of the data packet 4 is a network address of the second terminal device. Correspondingly, the first UPF receives the data packet 4.

It should be understood that the data content 2 is the reply data content of the data content 1. Therefore, the first terminal device includes the label of the second UPF in the data packet 4.

S531: The first UPF performs encapsulation processing on the data packet 4 based on the label of the second UPF carried in the data packet 4, to obtain a data packet 5. The encapsulation processing includes encapsulating the network address of the first UPF, the network address of the second UPF, and the label of the first UPF at an outer layer of the data packet 4, and deleting the label of the second UPF carried in the data packet 4. The network address of the first UPF is used as a source address of the data packet 5, and the network address of the second UPF is a destination address of the data packet 5.

It should be understood that, in S510, the first UPF receives the UPF network address list and the label of each UPF in the UPF network address list from the SMF. Therefore, the first UPF may determine the network address of the second UPF based on the label of the second UPF, and encapsulate the network address of the second UPF at the outer layer of the data packet 4.

S532: The first UPF sends the data packet 5 to the second UPF. Correspondingly, the second UPF receives the data packet 5.

S533: The second UPF performs decapsulation processing on the data packet 5 to obtain a data packet 6, where the data packet 6 includes the data content 2 and the label of the first UPF. The decapsulation processing is to delete the network address of the first UPF and the network address of the second UPF, and obtain the label of the first UPF by parsing the data packet 5.

S534: The second UPF sends the data packet 6 to the second terminal device based on the network address of the second terminal device.

It should be understood that sequence numbers of the foregoing processes do not mean an execution sequence, and the execution sequence of the processes should be determined based on functions and internal logic of the processes.

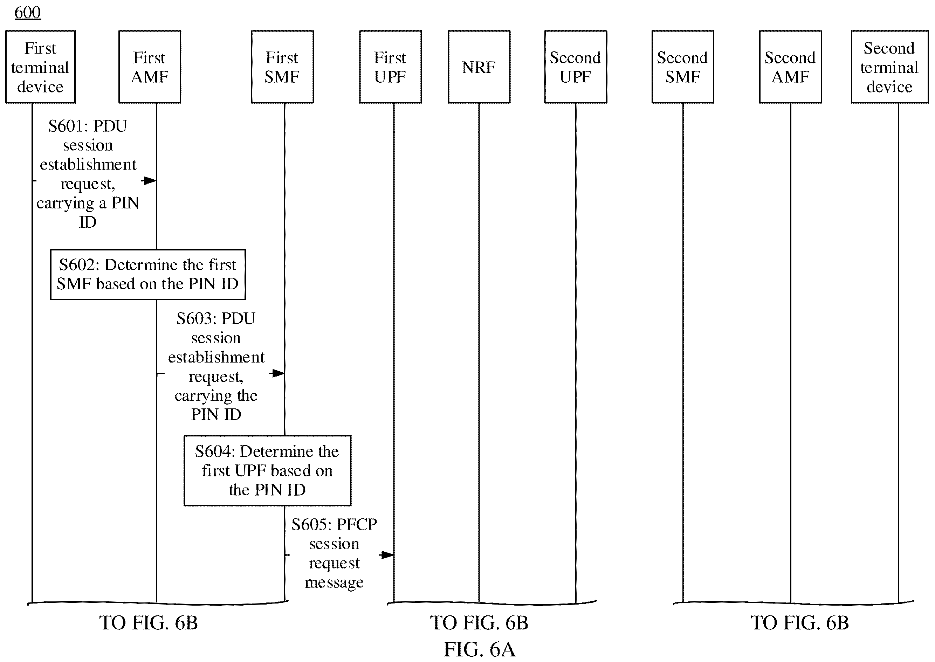

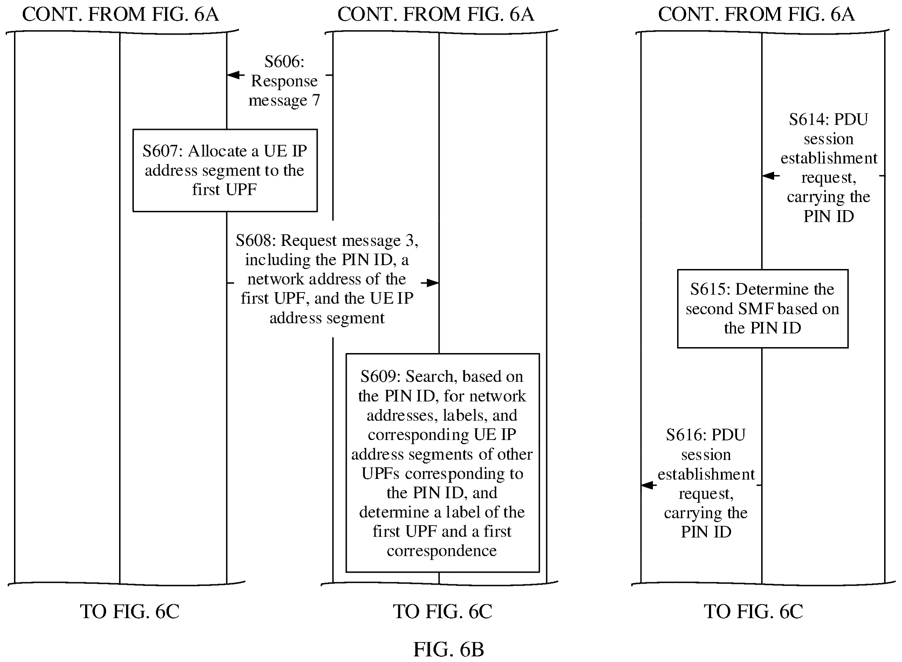

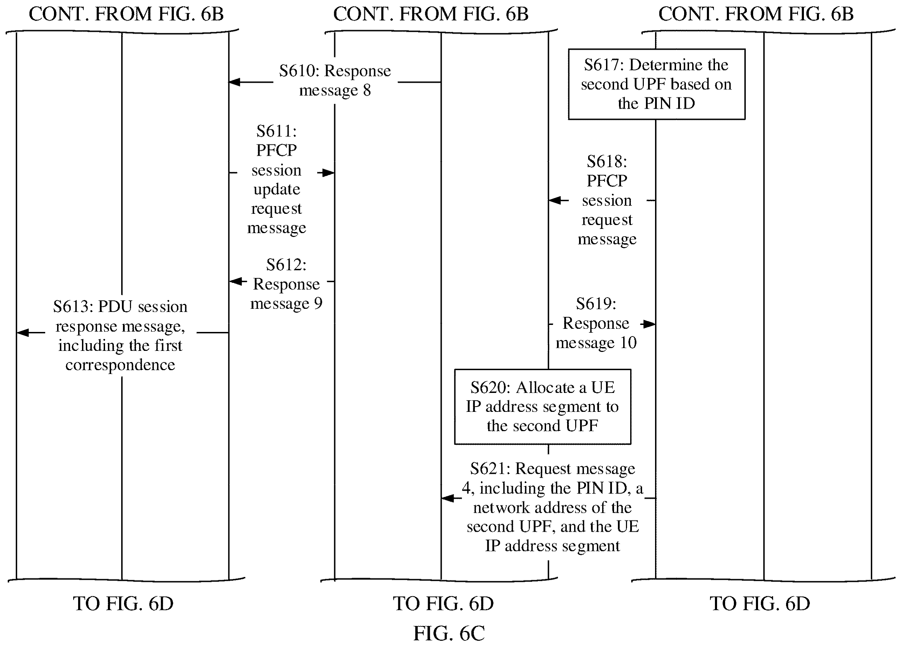

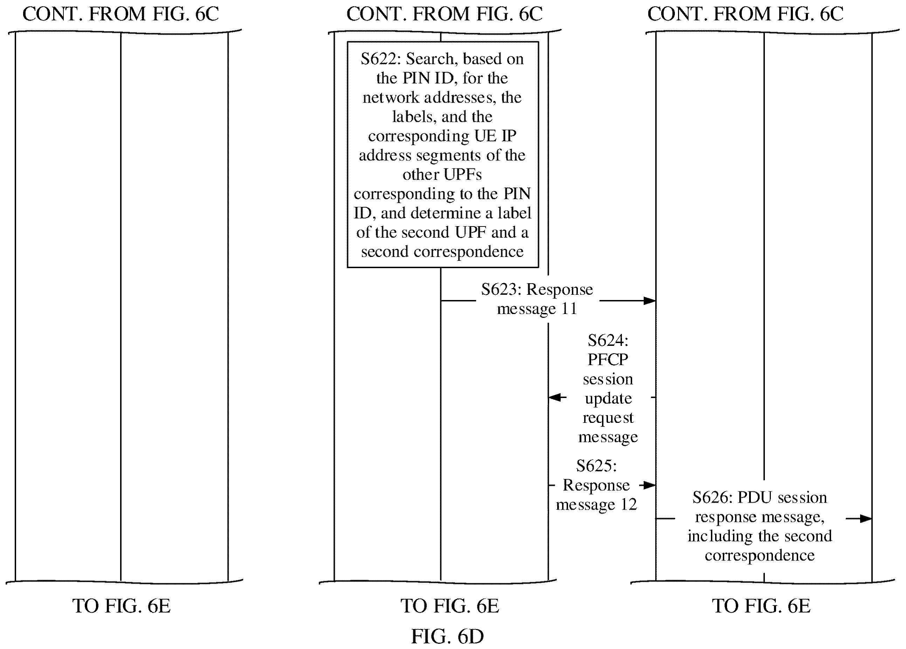

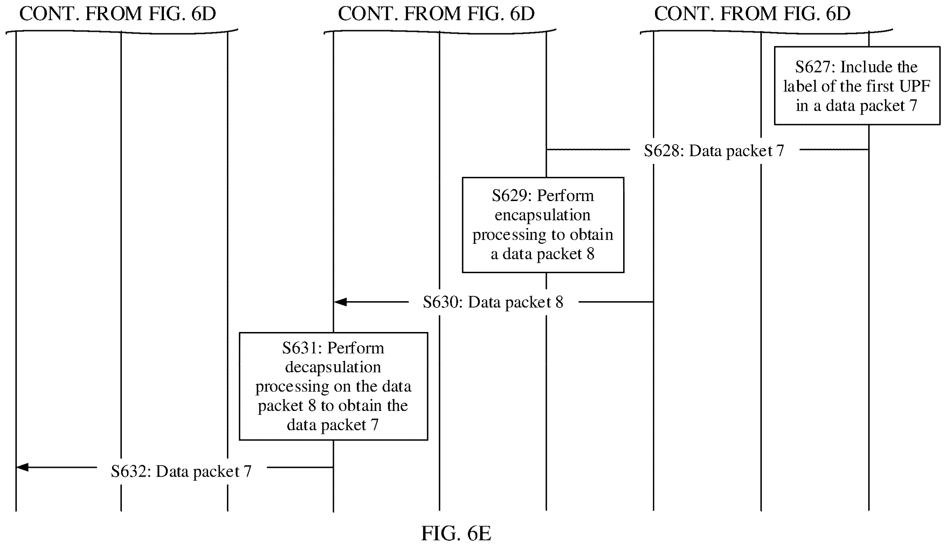

The following describes another data transmission method in this application with reference to FIG. 6A to FIG. 6E by using an example in which a first terminal device is UE 1, a second terminal device is UE 2, the first terminal device and the second terminal device belong to a same PIN network, and identification information of a UPF is a label. The method may be applied to the scenario 300. The first terminal device may be the UE 1 in the scenario 300, the second terminal device may be the UE 2 in the scenario 300, a first SMF may be the L-SMF A in the scenario 300, a second SMF may be the SMF C in the scenario 300, a first UPF may be the L-UPF A in the scenario 300, and a second UPF may be the UPF C in the scenario 300. The method 600 includes the following steps.

S601: The first terminal device sends a PDU session establishment request to a first AMF, where the session establishment request is used to request to establish a PDU session connection of the first terminal device, the session establishment request carries a PIN ID, and the PIN ID is identification information of the PIN network to which the first terminal device and the second terminal device belong. Correspondingly, the first AMF receives the PDU session establishment request from the first terminal device.

S602: The first AMF determines the first SMF based on the PIN ID.

S603: The first AMF sends the PDU session establishment request to the first SMF, where the session establishment request carries the PIN ID. Correspondingly, the first SMF receives the PDU session establishment request.

S604: The first SMF determines the first UPF based on the PIN ID.

S605: The first SMF sends a PFCP session request message to the first UPF, where the session request message carries the PIN ID and an IP address of the first terminal device. Correspondingly, the first UPF receives the PFCP session request message.

S606: The first UPF sends a response message 7 to the first SMF. Correspondingly, the first SMF receives the response message 7.

S607: The first SMF determines a UE IP address segment allocated to the PIN ID, and determines a UE IP address segment corresponding to the first UPF.

It should be understood that the UE IP address segment corresponding to the first UPF is an IP address segment obtained by UE connected to the first UPF, that is, an IP address segment of UE served by the first UPF. It should be further understood that the UE IP address segment corresponding to the PIN ID may alternatively be determined by the first UPF. When the UE IP address segment is determined by the first UPF, the first UPF sends, to the first SMF, the UE IP address segment allocated to the PIN ID. In addition to being determined by the first SMF, the UE IP address segment corresponding to the first UPF may also be determined by the first UPF. When the UE IP address segment is determined by the first UPF, the first UPF sends the UE IP address segment corresponding to the first UPF to the first SMF. This is not limited in embodiments of this application.

S608: The first SMF sends a request message 3 to an NRF, where the request message 3 includes the PIN ID, a network address of the first UPF, and the UE IP address segment corresponding to the first UPF. Correspondingly, the NRF receives the request message 2 from the first SMF.

S609: The NRF stores the PIN ID and the network address of the first UPF, and searches, based on the PIN ID, for network addresses, labels, and corresponding UE IP address segments of other UPFs corresponding to the PIN ID. The NRF determines a label of the first UPF, and a label of a UPF corresponding to the PIN ID and a UE IP address segment corresponding to the UPF form a first correspondence.

S610: The NRF sends a response message 8 to the first SMF, where the response message 8 includes the PIN ID, the label of the first UPF, the network addresses and the labels of the other UPFs corresponding to the PIN ID and the first correspondence, and the network addresses of the other UPFs corresponding to the PIN ID forms a UPF network address list. Correspondingly, the first SMF receives the response message 8.

S611: The first SMF sends a PFCP session update request message to the first UPF, where the PFCP session update request message includes a routing policy, the label of the first UPF, the UPF network address list, and a label of each UPF in the UPF network address list. Correspondingly, the first UPF receives the PFCP session update request message.

It should be understood that the routing policy information may include first routing policy information and second routing policy information, the first routing policy information may indicate the first UPF to include the labels of the other UPFs in an uplink data packet, and the second routing policy information may indicate the first UPF to include the label of the first UPF in a downlink data packet.

S612: The first UPF sends a response message 9 to the first SMF. Correspondingly, the first SMF receives the response message 9.

S613: The first SMF sends a PDU session response message to the first terminal device, where the response message includes the first correspondence.

S614 to S626 are a process in which the second terminal device establishes a PDU session. The process in which the second terminal device establishes the PDU session is consistent with the process in S601 to S613. To avoid repetition, details are not described herein again.

S627: The second terminal device determines, based on a destination address of a to-be-sent data packet 7, namely, the IP address of the first terminal device, that the IP address of the first terminal device falls within the UE IP address segment corresponding to the first UPF, and includes the label of the first UPF in the data packet 7.

S628: The second terminal device sends the data packet 7 to the second UPF. Correspondingly, the second UPF receives the data packet 7.

S629: The second UPF performs encapsulation processing on the data packet 7 based on the label of the first UPF in the data packet 7, to obtain a data packet 8. The encapsulation processing includes encapsulating a network address of the second UPF and the network address of the first UPF at an outer layer of the data packet 7. The network address of the second UPF is used as a source address of the data packet 8, and the network address of the first UPF is a destination address of the data packet 8.

It should be understood that the data packet 7 and the data packet 8 include same data content 3. It should be further understood that the second UPF receives the UPF network address list and the label of each UPF in the UPF network address list from the second SMF. Therefore, the second UPF may determine the network address of the first UPF based on the label of the first UPF, and encapsulate the network address of the first UPF at the outer layer of the data packet 7.

S630: The second UPF sends the data packet 8 to the first UPF. Correspondingly, the first UPF receives the data packet 8.

S631: The first UPF performs decapsulation processing on the data packet 8, to be specific, deletes the network address of the second UPF and the network address of the first UPF at an outer layer, to obtain the data packet 7.

S632: The first UPF sends the data packet 7 to the first terminal device based on the IP address of the first terminal device in the data packet 7. Correspondingly, the first terminal device receives the data packet 7.

It should be understood that sequence numbers of the foregoing processes do not mean an execution sequence, and the execution sequence of the processes should be determined based on functions and internal logic of the processes.

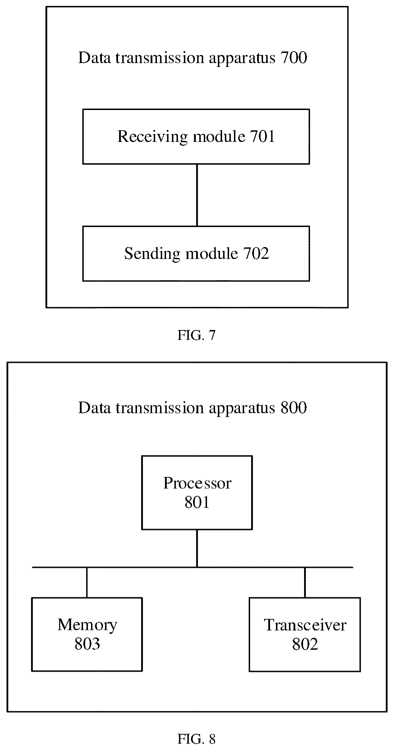

The foregoing describes in detail the data transmission method in embodiments of this application with reference to FIG. 4 to FIG. 6E, and the following describes in detail data transmission apparatuses in embodiments of this application with reference to FIG. 7 and FIG. 8.

FIG. 7 shows a data transmission apparatus 700 according to an embodiment of this application. The apparatus 700 includes a receiving module 701 and a sending module 702.

In a possible implementation, the apparatus 700 is configured to implement the steps corresponding to the first UPF in the foregoing method embodiments.

The receiving module 701 is configured to receive a first data packet from a first terminal device, where the first data packet carries identification information of a second UPF and a network address of the second terminal device.

The sending module 702 is configured to send a second data packet to the second UPF based on the identification information of the second UPF, where the second UPF is a UPF serving the second terminal device, and the second data packet carries the identification information of the apparatus 700 and the network address of the second terminal device.

Optionally, the first terminal device and the second terminal device belong to a personal internet of things network PIN network.

Optionally, the receiving module 701 is further configured to receive a third data packet from the second UPF, where the third data packet carries the identification information of the second UPF and a network address corresponding to a destination UPF, a destination address of the third data packet is the network address corresponding to the destination UPF, and the destination UPF includes the apparatus 700. The sending module 702 is further configured to send a fourth data packet to the first terminal device, where the fourth data packet carries the identification information of the second UPF.

Optionally, the first data packet and the second data packet include same data content.

Optionally, the receiving module 701 is further configured to receive at least one of the identification information of the apparatus 700, identification information of another UPF, and routing policy information from an SMF, where the apparatus 700 and the another UPF serve a same PIN network, the routing policy information includes first routing policy information and/or second routing policy information, the first routing policy information indicates the apparatus 700 to include the identification information of the apparatus 700 in an uplink data packet, and the second routing policy information indicates the apparatus 700 to include the identification information of the another UPF in a downlink data packet.

Optionally, the identification information of the apparatus 700 is included in any one of the following headers of the second data packet: an internet protocol IP header, a virtual extensible local area network VXLAN header, a general packet radio service tunnelling protocol for user plane GTP-U header, or an IP security IPsec header.

Optionally, the receiving module 701 is further configured to receive a fifth data packet from the first terminal device, where the fifth data packet carries the network address of the second terminal device. The sending module 702 is further configured to send a sixth data packet to the destination UPF, where the sixth data packet carries the identification information of the apparatus 700, the network address corresponding to the destination UPF, and the network address of the second terminal device, and the network address corresponding to the destination UPF is a destination address of the sixth data packet.

Optionally, the receiving module 701 is further configured to receive a seventh data packet from the first terminal device. The apparatus 700 further includes: a processing module, configured to determine, based on the seventh data packet, that the seventh data packet is a broadcast packet or a multicast packet. The sending module 702 is further configured to send an eighth data packet to the destination UPF, where the eighth data packet carries the identification information of the apparatus 700 and the network address corresponding to the destination UPF, and the network address corresponding to the destination UPF is a destination address of the eighth data packet.

Optionally, the processing module is further configured to determine the network address of the destination UPF and/or identification information of the destination UPF based on a PIN identifier of the PIN network.

In another possible implementation, the apparatus 700 is configured to implement the steps corresponding to the SMF in the foregoing method embodiments.

The receiving module 701 is configured to obtain identification information of a first UPF.

The sending module 702 is configured to send at least one of the identification information of the first UPF, identification information of another UPF, and routing policy information to the first UPF, where the first UPF and the another UPF serve a same PIN network, the routing policy information includes first routing policy information and/or second routing policy information, the first routing policy information indicates the first UPF to include the identification information of the first UPF in an uplink data packet, and the second routing policy information indicates the first UPF to include the identification information of the another UPF in a downlink data packet.

Optionally, the identification information of the first UPF is determined by one of the apparatus 700, an NRF, or the first UPF.

Optionally, the sending module 702 is further configured to send a first correspondence to a first terminal device, where the first correspondence includes a correspondence between identification information of at least one UPF and a network address of at least one terminal device served by the UPF.

In still another possible implementation, the apparatus 700 is configured to implement the steps corresponding to the first terminal device in the foregoing method embodiments.

The receiving module 701 is configured to receive a ninth data packet, where the ninth data packet carries a network address of a second terminal device.

The sending module 702 is configured to send a first data packet to a first UPF, where the first data packet carries identification information of a second UPF and the network address of the second terminal device.

Optionally, the apparatus 700 further includes a processing module, configured to determine the identification information of the second UPF corresponding to a destination address of the first data packet.

Optionally, the processing module is further configured to determine the identification information of the second UPF based on a first correspondence, where the first correspondence includes a correspondence between identification information of at least one UPF and a network address of at least one terminal device served by the UPF.

Optionally, the receiving module 701 receives the first correspondence from an SMF.

Optionally, the ninth data packet carries the identification information of the second UPF.

Optionally, the identification information of the second UPF is included in any one of the following headers of the first data packet: an Ethernet header, an internet protocol IP header, or a packet data convergence protocol PDCP header.

It should be understood that the receiving module may also be referred to as a receiving unit, and the sending module may also be referred to as a sending unit. This is not limited in this application.

It should be understood that, the apparatus 700 herein is presented in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that the apparatus 700 may be specifically the first UPF, the SMF, or the first terminal device in the foregoing embodiments, and the apparatus 700 may be configured to perform procedures and/or steps corresponding to the first UPF, the SMF, or the first terminal device in the foregoing method embodiments. To avoid repetition, details are not described herein again.

The apparatus 700 has a function of implementing the corresponding steps performed by the first UPF, the SMF, or the first terminal device in the foregoing methods. The foregoing function may be implemented by hardware, or may be implemented by hardware by executing corresponding software. The hardware or the software includes one or more modules corresponding to the function. For example, the receiving module 701 may be configured to perform steps and/or procedures of a receiving action, and the sending module 702 may be configured to perform steps and/or procedures of a sending action. The receiving module 701 may be replaced with a receiver, and the sending module 702 may be replaced with a transmitter, to separately perform receiving and sending operations and related processing operations in the foregoing method embodiments.

In this embodiment of this application, the data transmission apparatus 700 in FIG. 7 may alternatively be a chip or a chip system, for example, a system on a chip (system on a chip, SOC). Correspondingly, the receiving module 701 and the sending module 702 may be a transceiver circuit of the chip. This is not limited herein.

FIG. 8 shows another data transmission apparatus 800 according to an embodiment of this application. The data transmission apparatus 800 includes a processor 801, a transceiver 802, and a memory 803. The processor 801, the transceiver 802, and the memory 803 communicate with each other through an internal connection path. The memory 803 is configured to store a command. The processor 801 is configured to execute instructions stored in the memory 803, to control the transceiver 802 to send a signal and/or receive a signal.

It should be understood that the data transmission apparatus 800 may be specifically the first UPF, the SMF, or the first terminal device in the foregoing embodiments, and may be configured to perform steps and/or procedures corresponding to the first UPF, the SMF, or the first terminal device in the foregoing method embodiments. Optionally, the memory 803 may include a read-only memory and a random access memory, and provide instructions and data to the processor 801. A part of the memory 803 may further include a non-volatile random access memory. For example, the memory 803 may further store information about a device type. The processor 801 may be configured to execute the instructions stored in the memory, and when the processor 801 executes the instructions stored in the memory, the processor 801 is configured to perform steps and/or procedures in the foregoing method embodiment corresponding to the first UPF, the SMF, or the first terminal device. The transceiver 802 may include a transmitter and a receiver. The transmitter may be configured to implement steps and/or procedures that correspond to the transceiver and that are used to perform a sending action, and the receiver may be configured to implement steps and/or procedures that correspond to the transceiver and that are used to perform a receiving action.

It should be understood that in this embodiment of this application, the processor 801 may be a central processing unit (central processing unit, CPU), or the processor 801 may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, steps in the foregoing methods can be completed by using a hardware integrated logical circuit in the processor, or by using instructions in a form of software. The steps of the method disclosed with reference to embodiments of this application may be directly completed by a hardware processor, or may be completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor executes the instructions in the memory and completes the steps in the foregoing methods in combination with hardware of the processor. To avoid repetition, details are not described herein again.

This application further provides a computer-readable storage medium. The computer-readable storage medium is configured to store a computer program. The computer program is used to implement the method corresponding to the first UPF, the SMF, or the first terminal device in the foregoing embodiments.

This application further provides a computer program product. The computer program product includes a computer program (which may also be referred to as code or instructions). When the computer program is run on a computer, the computer may perform the method corresponding to the first UPF, the SMF, or the first terminal device shown in the foregoing embodiments.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiments described above are merely examples. For example, division into modules is merely logical function division. In actual implementation, there may be another division manner. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on actual needs to achieve the objectives of the solutions of embodiments.

In addition, functional modules in embodiments of this application may be integrated into one processing module, or each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A data transmission method, comprising:
receiving, by a first user plane function UPF, a first data packet from a first terminal device, wherein the first data packet carries identification information of a second UPF and a network address of a second terminal device; and
sending, by the first UPF, a second data packet to the second UPF based on the identification information of the second UPF, wherein the second UPF is a UPF serving the second terminal device, and the second data packet carries identification information of the first UPF and the network address of the second terminal device.

2. The method according to claim 1, wherein the first terminal device and the second terminal device belong to a same personal internet of things network PIN network.

3. The method according to claim 1 or 2, wherein before receiving, by the first UPF, the first data packet from the first terminal device, the method further comprises:
receiving, by the first UPF, a third data packet from the second UPF, wherein the third data packet carries the identification information of the second UPF and a network address corresponding to a destination UPF, a destination address of the third data packet is the network address corresponding to the destination UPF, and the destination UPF comprises the first UPF; and
sending, by the first UPF, a fourth data packet to the first terminal device, wherein the fourth data packet carries the identification information of the second UPF.

4. The method according to any one of claims 1 to 3, wherein the first data packet and the second data packet comprise same data content.

5. The method according to any one of claims 1 to 4, wherein the method further comprises:
receiving, by the first UPF, at least one of the identification information of the first UPF, identification information of another UPF, and routing policy information from a session management function SMF, wherein the first UPF and the another UPF serve the same PIN network, the routing policy information comprises first routing policy information and/or second routing policy information, the first routing policy information indicates the first UPF to comprise the identification information of the first UPF in an uplink data packet, and the second routing policy information indicates the first UPF to comprise the identification information of the another UPF in a downlink data packet.

6. The method according to any one of claims 1 to 5, wherein the identification information of the first UPF is comprised in any one of the following headers of the second data packet:
an internet protocol IP header, a virtual extensible local area network VXLAN header, a general packet radio service tunnelling protocol for user plane GTP-U header, or an IP security IPsec header.

7. The method according to any one of claims 1 to 6, wherein the method further comprises:
receiving, by the first UPF, a fifth data packet from the first terminal device, wherein the fifth data packet carries the network address of the second terminal device; and
sending, by the first UPF, a sixth data packet to the destination UPF, wherein the sixth data packet carries the identification information of the first UPF, the network address corresponding to the destination UPF, and the network address of the second terminal device, and the network address corresponding to the destination UPF is a destination address of the sixth data packet.

8. The method according to any one of claims 1 to 7, wherein the method further comprises:
receiving, by the first UPF, a seventh data packet from the first terminal device;
determining, by the first UPF based on the seventh data packet, that the seventh data packet is a broadcast packet or a multicast packet; and
sending, by the first UPF, an eighth data packet to the destination UPF, wherein the eighth data packet carries the identification information of the first UPF and the network address corresponding to the destination UPF, and the network address corresponding to the destination UPF is a destination address of the eighth data packet.

9. The method according to claim 7 or 8, wherein the method further comprises:
determining, by the first UPF, the network address of the destination UPF and/or identification information of the destination UPF based on a PIN identifier of the PIN network.

10. A data transmission method, comprising:
obtaining, by a session management function SMF, identification information of a first user plane function UPF; and
sending, by the SMF, at least one of the identification information of the first UPF, identification information of another UPF, and routing policy information to the first UPF, wherein the first UPF and the another UPF serve a same PIN network, the routing policy information comprises first routing policy information and/or second routing policy information, the first routing policy information indicates the first UPF to comprise the identification information of the first UPF in an uplink data packet, and the second routing policy information indicates the first UPF to comprise the identification information of the another UPF in a downlink data packet.

11. The method according to claim 10, wherein the identification information of the first UPF is determined by one of the SMF, an NRF, or the first UPF.

12. The method according to claim 10 or 11, wherein the method further comprises:
sending, by the SMF, a first correspondence to a first terminal device, wherein the first correspondence comprises a correspondence between identification information of at least one UPF and a network address of at least one terminal device served by the UPF.

13. A data transmission method, comprising:
receiving, by a first terminal device, a ninth data packet, wherein the ninth data packet carries a network address of a second terminal device; and
sending, by the first terminal device, a first data packet to a first user plane function UPF, wherein the first data packet carries identification information of a second UPF and the network address of the second terminal device.

14. The method according to claim 13, wherein before sending, by the first terminal device, the first data packet to the first UPF, the method further comprises:
determining, by the first terminal device, the identification information of the second UPF corresponding to a destination address of the first data packet.

15. The method according to claim 14, wherein determining, by the first terminal device, the identification information of the second UPF corresponding to the destination address of the first data packet comprises:
determining, by the first terminal device, the identification information of the second UPF based on a first correspondence, wherein the first correspondence comprises a correspondence between identification information of at least one UPF and a network address of at least one terminal device served by the UPF.

16. The method according to claim 15, wherein the method further comprises:
receiving, by the first terminal device, the first correspondence from an SMF.

17. The method according to claim 14, wherein the ninth data packet carries the identification information of the second UPF.

18. The method according to any one of claims 13 to 17, wherein the identification information of the second UPF is comprised in any one of the following headers of the first data packet:
an Ethernet header, an internet protocol IP header, or a packet data convergence protocol PDCP header.

19. A data transmission method, comprising:
obtaining, by a session management function SMF, identification information of a first user plane function UPF;
sending, by the SMF, at least one of the identification information of the first UPF, identification information of another UPF, and routing policy information to the first UPF, wherein the first UPF and the another UPF serve a same PIN network,
the routing policy information comprises first routing policy information and/or second routing policy information, the first routing policy information indicates the first UPF to comprise the identification information of the first UPF in an uplink data packet, and the second routing policy information indicates the first UPF to comprise the identification information of the another UPF in a downlink data packet;
receiving, by a first terminal device, a ninth data packet, wherein the ninth data packet carries a network address of a second terminal device;
sending, by the first terminal device, a first data packet to the first UPF, wherein the first data packet carries identification information of a second UPF and the network address of the second terminal device;
receiving, by the first UPF, the first data packet; and
sending, by the first UPF, a second data packet to the second UPF based on the identification information of the second UPF, wherein the second UPF is a UPF serving the second terminal device, and the second data packet carries the identification information of the first UPF and the network address of the second terminal device.

20. The method according to claim 19, wherein the method further comprises:
receiving, by the second UPF, the second data packet;
sending, by the second UPF, a tenth data packet to the second terminal device based on the network address of the second terminal device, wherein the tenth data packet carries the identification information of the first UPF; and
receiving, by the second terminal device, the tenth data packet.

21. A data transmission apparatus, comprising a receiving module and a sending module, wherein the receiving module and the sending module are configured to perform the method according to any one of claims 1 to 18.

22. A data transmission apparatus, comprising a processor, wherein the processor is coupled to a memory, the memory is configured to store a computer program, and when the processor invokes the computer program, the apparatus is caused to perform the method according to any one of claims 1 to 18.

23. A computer-readable storage medium, configured to store a computer program, wherein the computer program comprises instructions used to implement the method according to any one of claims 1 to 18.

24. A computer program product, wherein the computer program product comprises computer program code, and when the computer program code is run on a computer, the computer is caused to implement the method according to any one of claims 1 to 18.
